(19) Europäisches Patentamt
European Patent Office
Office européen des brevets

(11) EP 1 514 595 A2

(12) **EUROPEAN PATENT APPLICATION**

(43) Date of publication:
**16.03.2005 Bulletin 2005/11**

(51) Int Cl.[7]: **B01J 19/00**, B01L 3/00

(21) Application number: **04020406.7**

(22) Date of filing: **27.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **27.08.2003 JP 2003303419**

(71) Applicant: **MATSUSHITA ELECTRIC INDUSTRIAL CO., LTD.**
**Kadoma-shi, Osaka 571-8501 (JP)**

(72) Inventor: **Mino, Norihisa**
**Osaka-shi Osaka (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) **Microchip, process of manufacturing the same, and analytical method using the same**

(57) A microchip comprising a substrate and a plurality of areas capable of storing a liquid containing at least one of sample, reagent and solvent thereon, wherein: regions surrounding said areas capable of storing a liquid on the surface of said substrate are coated with a monolayer; said monolayer is more less-compatible with a liquid than the areas capable of storing a liquid; and said monolayer is connected to said substrate via a covalent bond, enabling analysis superior in sensitivity and accuracy and miniaturization of analytical instruments.

FIG.1

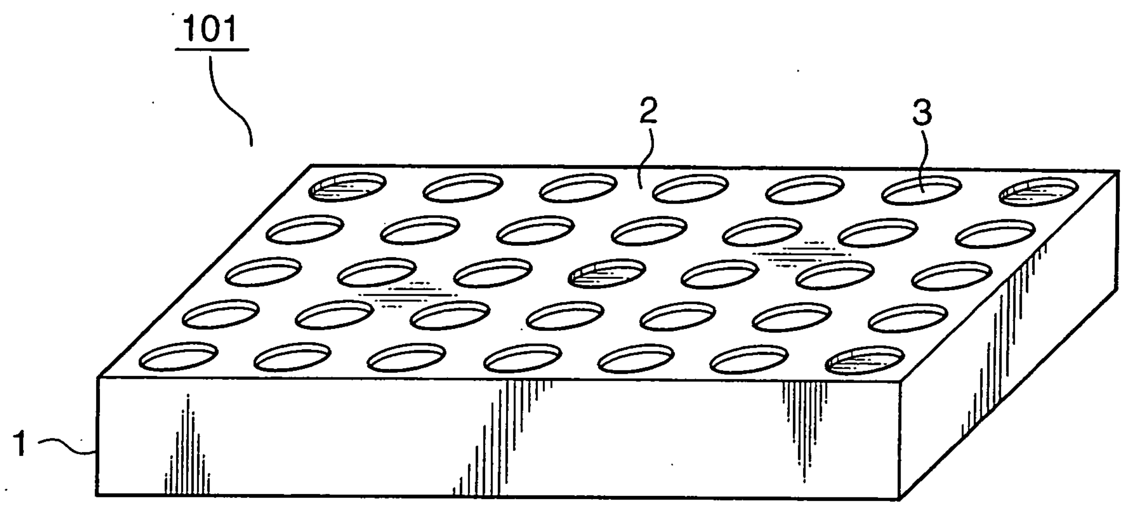


EP 1 514 595 A2

**Description**

Background of the Invention

Field of the Invention;

The present invention relates to a substrate for use in various microchips such as DNA chip, protein chip, and the like, a process of manufacturing the same, and an analytical method using the same.

Description of the related art:

Recently, many DNA chips and DNA microarrays (hereinafter, referred to as "DNA chips") have been commercialized as a new tool for gene analysis for the purpose of diagnosis and prevention of diseases, development of new drugs, and the like. The DNA chips generally include those whereon numerous DNA probes are immobilized at high density by spotting droplets of DNA solutions containing DNA probes of known gene sequences on a glass substrate, those whereon DNA probes are immobilized by preparing DNAs on a glass substrate, and others.

Various studies concerning the DNA chips are in progress for further miniaturization of the reaction field (droplet of sample solution) and for the purpose of higher-density spotting.

The DNA chips allow, for example, evaluation of the presence or absence of expression of desired genes, by applying complementary DNAs (cDNAs) reverse-transcribed from the mRNAs collected from test samples on analytical unit whereon the DNA probes are immobilized and detecting hybrid formation between the cDNAs and the DNA probes on the substrate. In addition, the DNA chips allow, for example, effective analysis of samples available only in limited amounts. Further, because various DNA probes can be immobilized on a single substrate of DNA chip, multiple analytical items of a single sample can be analyzed on a single DNA chip.

For detection of the hybrid formation and the like described above, fluorescent markers and the like are commonly used

CCDs, which can recognize the luminescent state (or coloring) of the DNA chips, draw the results on a two-dimensional map, and obtain many pieces of information at a time, are commonly used as the means of detecting luminescence (or coloring). Conventional detecting instruments equipped with a CCD as the fluorescence detection means have a configuration wherein a DNA microchip after hybridization between target genes and immobilized probes is placed and the luminescence therefrom is detected inside the instrument (prior art 1: Tadashi Matsunaga (Ed.), Genome Engineering Research Society, "DNA Chip and it's Applications", CMC Publishing Co., Ltd, July 31, 2000, p. 45 to 49).

In addition, for improvement in detection sensitivity, a fluorescence detection device having a configuration wherein a photodiode is used as the fluorescence detection means and a fluorescence reaction cell as a reaction field is formed on the photodiode is proposed (prior art 2: Japanese Unexamined Patent Publication No. 2002-350346).

Further, also proposed is a reaction field array having a configuration wherein convex patterns non-compatible with liquids such as test samples are placed on the substrate, as they are separated from neighboring reaction fields, by forming patterns on metal or plastic polymer matrices (prior art 3: Jpn. Unexamined Patent Publication No. 11-99000). The reaction field arrays are intended to prevent mixing (contamination) of neighboring reaction fields on the substrate, which is caused by the spread of the droplets of sample solution thereon.

Further, a biological sample-analyzing instrument that have a sample plate on which a plurality of reaction cells for storing biological samples are distributed one- or two-dimensionally, a photosensor array corresponding thereto, and a photosensor array substrate on which a pixel selection circuit for signal retrieval is formed, wherein the light generated by the reaction of a the biological sample and a reagent in the reaction cell corresponding to the pixel is received by the photosensor of selected pixel and the signal is retrieved from the selected pixel is proposed as the instrument for conducting gene tests in the easier and more economical manner (prior art 4: Japanese Unexamined Patent Publication No. 2003-329681).

However, DNA chips sufficiently high in analytical sensitivity and accuracy are yet to be available by the prior art including those described above. It is because aqueous solutions are commonly used as the solvent, the substrate such as glass substrate and the like are more compatible with aqueous solutions, and the reaction fields formed are very small in volume. More recently, miniaturization of reaction field and high-density spotting, i.e., further reduction in the volume of the droplets dropped and increase in the number of droplets placed on a single chip were attempted for further improvement in analytical efficiency and reduction in analytical cost, and thus acceleration of the miniaturization of analytical instruments, only leading to decrease in analytical sensitivity and accuracy. Thus, it seems extremely difficult to achieve the objective.

For example, the DNA chip and detecting instrument described in prior art 1 employ a substrate material having hydrophilic surface (e.g., glass and the like). As a result, there is a limit in preventing spreading of the droplets

dropped on the surface sufficiently.

It was also quite difficult to prevent the incidence of contamination sufficiently, when the miniaturization and the high-density spotting of reaction fields on a substrate surface are attempted at a higher level. There exists a problem that if the signals of luminescence or coloring are very weak on the DNA chip or in the detecting instrument, it is quite difficult to recognize the signals by CCD, resulting in decrease in analytical sensitivity. Because the darkroom of the instrument should be designed at a extremely larger size than that of the DNA chip, there is a limit to miniaturization of instrument.

The detecting instrument described in prior art 2 has a configuration
wherein a container made of a transparent material is constructed as the fluorescence reaction cell on a transparent substrate or dents are constructed as fluorescence reaction cells on the surface of a transparent-surface substrate by mechanical processing the same, and thus it is difficult to construct minute-scale dents on the transparent substrate surface at high density.

Further, in the reaction field array described in prior art 3, the convex matrix pattern formed on the substrate surface is made of a resin material such as a photosensitive resin or the like, if the sample droplet is an aqueous solution. The convex matrix patterns made of a resin material such as a photosensitive resin or the like formed on the substrate and metal matrix convex patterns formed by the coating method using a vapor deposition technique are easily separated from the substrate and thus not sufficiently reliable. In particular, it is difficult to prevent separation of all or part of the convex matrix pattern from the substrate sufficiently, and consequently to obtain sufficient reliability when such chips are used repeatedly or stored for a long time. Although the reason why the convex matrix pattern is so easily separated from the substrate is not clearly understood, the present inventors believe that the fact that the convex matrix pattern is connected to the substrate surface via weak bonds such as those of physical absorption, intermolecular force, hydrogen bonding, or the like is one of the factors.

If a metallic convex matrix pattern is used, the convex matrix pattern surface tends to form a hydrophilic film containing metal oxide, resulting in more frequent contamination when droplets of an aqueous sample are used.

The biological sample-analyzing instrument described in prior art 4 has a reaction cell larger in volume. In contrast, analytes such as genes, immobilized DNAs, and the like have a size on the nanometer order. Accordingly, as the reaction field is quite larger than the size of the analyte genes and immobilized DNAs, such an instrument demands a great amount of sample solution in a single reaction cell. An insufficient amount of sample may lead to decrease in hybridization efficiency and consequently to decrease in detection accuracy.

All of the problems above are present not only in the technical field of analysis using the DNA chips, and occur in an analogous manner in the technical fields of qualitative or quantitative analysis for determining the substances contained in liquid phase, and of development and analysis of chemical and biochemical reactions which take place in reaction field of liquid phase, if the miniaturization and high-density spotting of reaction fields on a substrate surface is attempted at a higher level.

## Brief Summary of Invention

The present invention was achieved in view of the circumstances described above, and a first object thereof is to provide a microchip that retains a sufficiently high analytical sensitivity even when miniaturization and high-density spotting of reaction fields attempted.

A second object of the present invention to provide a microchip that is protected from the incidence of contamination by neighboring reaction fields and thus provide a high analytical accuracy even when the miniaturization and high-density spotting of reaction fields are attempted.

Additionally, a third object of the present invention is to provide a reaction field that allows miniaturization of microchip and thus reduction in the thickness of instruments.
Further, a fourth object of the present invention is to provide a microchip more resistant to deterioration of the substrate even when droplets of an aqueous solution are used.

To attain the objects above, the microchip according to the present invention is a microchip comprising of a substrate and a plurality of areas capable of storing a liquid containing at least one of a sample, a reagent and a solvent thereon, wherein: regions surrounding the areas capable of storing a liquid on the surface of the substrate are coated with a monolayer; the monolayer is less compatible with a liquid than the areas capable of storing a liquid; and the monolayer is connected to the substrate via a covalent bond.

By employing the microchip structure above, the microchip becomes more resistant to contamination when it stores the liquid above.

Further, the process of manufacturing the microchip according to the present invention forms a plurality of areas capable of storing a liquid containing at least one of a sample, a reagent and a solvent thereon on a substrate by the steps of: providing an organic molecule containing a bonding functional group capable of forming a covalent bond with an active hydrogen on the substrate surface at a terminal and a terminal group less-compatible with a liquid

at the other terminal; contacting the organic molecule with regions having the active hydrogen on the substrate surface; and selectively connecting a monolayer less-compatible with a liquid to regions on the substrate surface surrounding the areas capable of storing a liquid by forming the covalent bond in the reaction of the terminal bonding functional group of the organic molecule and the active hydrogen of the substrate.

When a monolayer is formed in this production process, the organic molecule less-compatible with the liquid form the covalent bond with the substrate and become connected as less-compatible organic group selectively to the substrate surface, providing microchips uniform in thickness and higher in durability.

In a preferred embodiment of the present invention, biomacromolecule is analyzed on the microchip prepared as described above, by dropping droplets of a preadjusted aqueous solution containing a probe at high density thereon.

As the areas capable of storing a liquid are separated from each other by a hydrophobic monolayer, the reaction fields are confined in the areas, thus preventing contamination between reaction fields adjacent to each other and allowing preservation of high analytical accuracy, even when the analysis is performed at high density.

In the present invention, the aforementioned "monolayer" is a layer that is bound to the substrate via a covalent bond. Accordingly, the aforementioned substrate means the portion excluding the monolayer, and dents, i.e., liquid-storing areas, may not be formed previously on the substrate. That is, the dents may be formed by coating a monolayer selectively on the substrate surface and used as the liquid-storing areas. Alternatively, the liquid-storing areas may be formed by using a substrate whereon dents are previously formed and coating the regions on the substrate surface surrounding the dents with a monolayer selectively. The monolayer according to the present invention may be a single layer (1 layer) or a laminated layer consisting of multiple layers, if the volume and the density of the areas capable of storing a liquid are favorably controlled at the same time. Further, the monolayer is not limited to a single kind of layer and may be a layer consisting of multiple monolayers different in structure, shape, dimension, compatibility with a liquid, or the like.

The monolayer may also be a complex layer consisting of the single layers and the laminated layers described above, if the volume and the density of the areas capable of storing a liquid are favorably controlled at the same time. These layers may be used, for example, when it is desirable that a plurality of the areas capable of storing a liquid on the substrate surface are divided into two or more groups and there should be a difference in volume among the areas in respective groups.

In addition, the areas capable of storing a liquid are the dents storing a desirable amount of droplets, and the state of being "stored" includes a state of all of a droplet being placed in the dent as well as a state of only part of a droplet being placed in the dent and the other part thereof being protruded from the opening of the dent. The samples and the reagents are sometimes liquid per se.

Brief Description of Drawings

Figure 1 is a perspective view illustrating an embodiment of the microchip according to the present invention.
Figure 2A is a schematic partial cross-sectional view of the basic configuration of an embodiment of the microchip according to the present invention.
Figure 2B is a schematic partial cross-sectional view illustrating the basic configuration of another embodiment of the microchip according to the present invention.
Figure 3 is a schematic cross-sectional view illustrating the state of the droplet in each area of the microchip shown in Figure 2A.
Figure 4 is a perspective view illustrating the basic configuration of a device supplying droplets onto the microchip according to the present invention.
Figure 5 is a Fourier transform infrared absorption spectra of the monolayer prepared in EXAMPLE 1 of the present invention.
Figure 6 is a micrograph showing the droplets dropped on the microchip prepared in EXAMPLE 1 of the present invention.

Detailed Description of Invention

The microchips according to the present invention include, for example, the first embodiment of microchips represented by so-called DNA chips and the second embodiment of microchips represented by so-called integrated microchips.

An example of the first embodiment of microchips is a microchip having at least 2 areas (capable of storing liquids as analytical units wherein probes are immobilized) on the substrate surface and the regions surrounding the areas above or all other regions except the areas above on the same substrate surface that are coated with a monolayer.

When different DNA probes are immobilized or prepared directly in the respective areas for analyzing samples, construction of a monolayer on the substrate area other than those accommodating a plurality of liquids allows prevention of the incidence of the contamination of DNA probes and the probe reagents between the neighboring analytical areas. It also prevents decrease in analytical sensitivity even if the analytical areas are reduced by patterning the monolayer.

Substrates in this form commonly have a dimension of 1 to 100 mm in length, 1 to 200 mm in width, and 500 to 5,000 μm in thickness. The number of the analytical units is, for example, 10 to 1000,000, and the area of the bottom face of a dent is, for example, 0.001 to 0.1 $mm^2$.

Microchips in the second embodiment have the areas accommodating a plurality of liquids including a sample inlet unit, a reagent unit for storing a reagent, and a solvent unit for storing a solvent and the grooves that serve as flow channels connecting at least part of the areas above for storing liquids on the substrate surfaced and the regions surrounding liquid-storing areas and grooves or all other regions except the areas for storing liquids and grooves of the substrate surface that are coated with a monolayer.

Construction of a monolayer on the regions except those for storing and supplying liquids enables prevention of the migration of these liquids from the liquid-storing areas and the grooves, thus eliminating the problems associated with miniaturization.

Substrates in this embodiment commonly have a dimension of 5 to 100 mm in length, 5 to 100 mm in width, and 500 to 5,000 μm in thickness, and the width of the flow channels is, for example, 0.5 to 0.005 mm, and the depth of the flow channels and dents, for example, 0.5 to 0.005 mm.

Examples of the substrates according to the present invention include the substrates known in the art including glass substrate, quartz substrate, synthetic quartz substrate, silicon substrate, various polymer substrates such as acrylic substrate, polystyrene substrate, polyvinyl chloride substrate, epoxy resin substrate, silicone resin (polydimethylsilicone) substrate, PMMA (polymethyl methacrylate) substrate, and polycarbonate substrate, ceramic substrate, metal substrate, and the like. Among them, glass and quartz substrates are preferable, as they have a structure having many hydroxyl groups on the surface thereof. The substrates for microchips may have additionally another substrate adhered or bonded to the substrate described above.

The areas for storing respective liquids, i.e., the reaction fields, according to the present invention, are constructed by coating a monolayer less compatible with the liquids stored than liquid-storing areas on the regions surrounding the liquid-storing or groove areas of the substrates above.

The less-compatibility of the region surrounding the area capable of storing a liquid on the surface of the substrate is determined by a comparison with compatibility of the area for storing a liquid. For example, if both a region and an area are hydrophile with aqueous solution but the hydrophilicity of the area for storing a liquid is higher than that of the region, the region is less-compatible with the aqueous solution. From the view point of the contamination of the liquid between the areas adjacent to each other, the region non-compatible with a liquid, for example hydrophobic if the solution is aqueous, is more preferably.

Figure 1 is a schematic view illustrating a microchip in the first embodiment of microchips, which is prepared by coating a monolayer over entire regions of the substrate surface except the dents forming liquid-storing areas. In Figure 1, numeral 1 represents a substrate and numeral 2 represents the surface of a monolayer. Dents 3 are formed as the plurality of the areas for accommodating liquids. All drawings illustrating a microchip, including Figure 1, are schematic views provided only for describing the present invention in a simpler way, and the dimension and shape therein do not reflect those of an actual microchip.

As shown in the cross-sectional view of Figure 2A, in a microchip 101 belonging to the first embodiment of microchips, dents 3 are formed by coating a monolayer 2 on the regions surrounding portions of the surface F1 of substrate 1 and forming an internal wall F2. Accordingly in this embodiment, the bottom face inside the dents, where no monolayer is formed, has an affinity to liquid different from that of the monolayer.

Different from the shape above, the substrate in Figure 2B has preliminarily formed dents having a particular volume. As shown in the cross-sectional view of Figure 2B, the regions surrounding the openings of the preliminarily formed dents on substrate surface may be coated with a monolayer 2 less-compatible with the liquid. Accordingly in this embodiment, the bottom face and part of the sidewall of the dents have compatibility to the liquid different from that of the monolayer. In this case, the monolayer may be constructed in such a manner that the layer becomes in contact with the dent openings of the substrate surface or part of the substrate surface is left uncoated.

Figure 3 is a drawing illustrating the state of a reaction field 4 formed by dropping a liquid less compatible with the monolayer onto the microchip shown in Figure 2A. By coating monolayer 2 less compatible with the liquid than part of the areas for storing liquids 3 on the regions surrounding liquid-storing areas 3 on the substrate surface in this manner, droplets 4 dropped are placed in the dents sticking out of the openings almost in the hemispherical shape or almost in the columnar shape having a hemispherical tip atop, and once placed therein, the droplets are confined to the areas, as the monolayer is less compatible with the droplets than the inner faces of dents.

In this manner, the volume of the droplet actually placed in a dent becomes significantly larger than the geometrical volume inside the dent. Accordingly, even when dents having a smaller geometrical capacity are formed, it is possible to use a larger amount of droplets sufficient to allow high-sensitivity analysis. The droplets placed in the dents have a shape favorable for detection of the reaction therein, and from this viewpoint too, the microchip according to the present invention easily obtains a sufficiently high analytical sensitivity.

For example, if the bottom face of a dent is close to circular, a droplet having a height (distance from the bottom face of dent to the top of droplet) almost equivalent to the radius r of the dent may be placed on the bottom face of the dent. The present inventors have found that a droplet having a height of, for example, 1,000 times or more larger than the thickness of the monolayer could be placed in a dent. It was quite difficult to place a sufficient amount of droplets in such an extremely small areas by the configurations of the prior art described above.

For example, prior art 3 described above discloses that it is possible to suppress the incidence of contamination by increasing the height of convex matrix pattern to 1 μm or more, but the present inventors have found that it is possible in the present invention to suppress contamination sufficiently even when the thickness of monolayer, which corresponds to the height of the convex matrix pattern, is reduced to 50 nm or less.

In an analytical instrument for analyzing biomacromolecules wherein the microchip according to the present invention is used, a DNA probe is immobilized in the dent, and using the droplet dropped onto the dent are used as reaction fields, the density, shape, and the like of the reaction field may be the same as those of the microchips known in the art, but the present invention is more advantageous when the reaction fields (droplets in dents) are further miniaturized or more densely placed.

The volume of the droplet in a dent is preferably 0.01 to 1,000 pL, more preferably 0.01 to 35 pL, and still more preferably 0.01 to 1.2 pL, from the viewpoint of reducing the volume of the reaction field to 1,000 pL or less and increasing the density of reaction fields to 10,000 /cm$^2$. If the volume of the droplet in a dent is less than 0.01 pL, it becomes more difficult to obtain a sufficiently high analytical sensitivity.

In addition, if the volume of the droplet in a dent is more than 1,000 pL, it becomes more difficult to miniaturize the reaction field and to distribute the reaction fields more densely. Further, if the volume of the droplet in a dent is in the range of 0.01 to 35 pL, it is possible to raise the density of reaction fields easily to 100,000 /cm$^2$ or more. Particularly if the volume of the droplet in a dent is 0.01 to 1.2 pL, it becomes possible to raise the density of reaction fields easily to 1,000,000 /cm$^2$ or more.

As described above, the volume of a dent (geometrical volume) can be reduced significantly in the present invention compared to the volume of the droplet to be placed in the dent. Therefore in the present invention, when the volume of the droplet in a dent is adjusted in the range of 0.01 to 1,000 pL, the volume of the dent may be significantly reduced from that of the droplet.

Specifically in this case, the volume of a dent is preferably $2\times10^{-6}$ to 1 pL. From the same viewpoint as above, if the desired volume of the droplet in a dent is 0.01 to 35 pL, the volume of the dent is preferably $2\times10^{-6}$ to $1\times10^{-1}$ pL. Further, from the same viewpoint as above, if the desired volume of the droplet in a dent is 0.01 to 1.2 pL, the volume of a dent is preferably $2\times10^{-6}$ to $2\times10^{-3}$ pL and more preferably $2\times10^{-6}$ to $7\times10^{-4}$ pL.

In the analytical instrument according to the present invention, the number of dents per unit area formed on the substrate surface is preferably 10,000 /cm$^2$ or more, for miniaturization and high-density packing of reaction fields (droplets in dents) and for controlling the volume of the reaction field preferably at 1,000 pL or less and the density of reaction fields at 10,000 /cm$^2$ or more.

In the present invention, the "unit area of substrate surface" used in defining "the number of dents (liquid-storing areas) per unit area formed on the substrate surface" is a value calculated from the total sum of the area of dent bottom faces and the region coated with a monolayer on the substrate surface. Accordingly, if areas other than these areas are formed, the unit area of substrate surface is calculated by subtracting these other areas. In this specification, "the number of dents per unit area formed on the substrate surface" is also referred to as needed as the "density of the dents on substrate surface".

In the present invention, the density of reaction fields may also be 100,000 /cm$^2$ or more. The number of dents per unit area formed on the substrate surface is preferably 100,000 /cm$^2$ or more from this viewpoint. Further, the number of dents per unit area formed on the substrate surface is still more preferably 1,000,000 /cm$^2$ to 8,000,000 /cm$^2$, for increasing the density of reaction fields to 1,000,000 /cm$^2$ or more.

If the number of dents exceeds 8,000,000 /cm$^2$, the volume of the droplet in a dent becomes even smaller, leading to decrease in luminescence when a reaction is detected by fluorescence, i.e., decrease in analytical sensitivity, and consequently demanding some countermeasures for compensating the decrease in luminescence such as elongation of the photo-receiving time (analytical time), increase in the frequency of sampling, or the like.

In the present invention, the thickness of the monolayer is not particularly limited, if it is a thickness that allows miniaturization and high-density packing of the reaction fields and especially that allows the volume of a dent on the substrate surface to fall in the range of 0.01 to 1 pL and the density of the dents formed on the substrate surface to become 10,000 /cm$^2$ or more. For example, the thickness may be similar to the dimension (length) of an organic molecule (single molecule) after covalently bound to the substrate surface or larger than the dimension of an organic

molecule. However, for obtaining the advantageous effects of the invention more reliably, a single layer of monolayer is preferably, and the thickness thereof is preferably 0.5 nm to 50 nm, more preferably 0.5 nm to 10 nm, and still more preferably 0.5 nm to 5 nm.

More specifically, for bringing the volume of the droplet in a dent in the range of 0.01 to 1,000 pL and making the density of the dents formed on substrate surface 10,000 /$cm^2$ or more, the volume of a dent is preferably $2\times10^{-6}$ to 1 pL, the area of the bottom face of dents is preferably 4 to 17,500 $\mu m^2$, and the thickness of monolayer is preferably adjusted in such a manner that the volume of a dent and the area of bottom face are adjusted in the ranges above.

If the desired volume of the droplet in a dent is 0.01 to 35 pL and the desired density of the dents formed on substrate surface is 100,000 /$cm^2$ or more, the volume of a dent is preferably $2\times10^{-6}$ to $1\times10^{-1}$ pL, the area of the bottom face of dents is 4 to 1,600 $\mu m^2$, and the thickness of monolayer is preferably 0.5 to 50 nm.

Further, if the desired volume of the droplet in a dent is 0.01 to 1.2 pL and the desired density of the dents formed on substrate surface is 1,000,000 /$cm^2$ or more, the volume of a dent is preferably $2\times10^{-6}$ to $2\times10^{-3}$ pL, the area of the bottom face of dents is preferably 4 to 155 $\mu m^2$, and the thickness of monolayer is preferably 0.5 nm to 10 nm. In this case, the volume of a dent is preferably further reduced to $2\times10^{-6}$ to $7\times10^{-4}$ pL and the thickness of monolayer is preferably controlled at 0.5 nm to 5 nm while the area of the bottom face of dents is maintained in the same range.

For ensuring prevention of contamination, the distance between neighboring dents is preferably 0.1 μm or more and more preferably 1 to 100 μm.

Hereinafter, the monolayer according to the present invention will be described.

In the present invention, a substrate having a characteristic group containing an active hydrogen such as -OH, $-NH_2$, =N-H, quaternary ammonium ion, $-PO_3H$, $-SO_3H$, -SH, or the like that binds to an organic molecule is used as the substrate for construction of a monolayer. The monolayer is preferably prepared by a monolayer-forming process of providing an organic molecule having a functional terminal group, which forms a covalent bond in reaction with the active hydrogen of the substrate surface, and other terminal group having a characteristic group less-compatible with the liquid to be stored at the other terminal; bringing the organic molecule into contact with the substrate; and thus causing a condensation reaction so as to form the covalent bond.

In the substrate above, portions other than active hydrogens may be present in the substrate. For example, portions other than active hydrogens may be present in the substrate and the portions other than active hydrogens may bind to the constituent elements of the substrate. More specifically, if a substrate has, for example, a metal oxide as the constituent material and the group having an active hydrogen is $-PO_3H$, all of the $-PO_3H$ groups may be exposed or only -OH groups of the $-PO_3H$ groups may be exposed. The $-PO_2-$ portions hidden in the substrate may be $-PO_2-$ per se, or the oxygen bound to P may bind, for example, to a metal atom (metal ion) $M^1$ in bulk metal oxide, forming a structure of $-P-O-M^1-$.

The substrate should have active hydrogens only when a monolayer is formed, and thus may have previously a sufficient amount of active hydrogens for forming a monolayer or the substrate may be granted with the active hydrogens before the monolayer-forming process.

The covalent bond formed by the condensation reaction of an active hydrogens with the terminal functional group of the organic molecule described above is at least one covalent bond selected from the group consisting of M-O, M-N and M-S bonds (M: Si, Ti, Al or Sn), depending on the structure of the characteristic group having an active hydrogen present in the substrate and the kind of the organic molecule, i.e., the raw material for the monolayer. The bond preferably is a bond containing at least one structure selected from the group consisting of Si-O, Si-N, and Si-S bonds, more preferably a Si-O or Si-N bond, and still more preferably a Si-O bond, from the viewpoint of easier manufacture.

As described above in the present invention, the organic molecule forming the monolayer preferably may have a terminal functional group capable of forming a covalent bond with the substrate surface above at a terminal thereof and a characteristic group less-compatible with the liquid at the other terminal. The group "less-compatible with the liquid" may be determined suitably according to the kind of liquid used, but is preferably, for example, hydrophobic if the solution is aqueous as in the cases where DNA probes are immobilized.

When an organic molecule of the present invention has a branched structure, the terminal group less-compatible with a liquid is at least one of the terminal groups not binding to a covalent bond, preferably a terminal group of a long-chain.

The degree of hydrophobicity is determined relatively according to the liquid to be placed. For example, if the liquid is a solution mainly containing water, the critical surface energy of the substrate is preferably 25 mN/m or less and more preferably 8 mN/m or more at 20°C.

The critical surface energy is obtained by measuring a contact angle by using a standard solution for measuring critical surface energy and a static contact-angle meter, plotting the energy values of the standard solutions against the values of cosine of the contact angles, and extrapolating the line to the energy value at the cosine value of 0. In addition, the difference in critical surface energy between the hydrophilic and hydrophobic portions when the

liquid is an aqueous solution may be selected properly according to the distance between dents, the kind of the substrate whereon the monolayer is formed, and the aqueous solution used, but is preferably 20 mN/m or more and more preferably 40 mN/m or more. On the other hand if the monolayer is formed with an organic molecule described above, the aforementioned difference is preferably 75 mN/m or less and more preferably 65 mN/m or less.

The degree of hydrophobicity is such that when a 5.3 µL of droplet is dropped on the surface of an monolayer at 20°C, the contact angle between the droplet and the surface is preferably 80 to 180°, more preferably 90 to 180°, and still more preferably 100 to 160°. The contact angle may be determined, for example, according to the measuring method specified in JIS R3257:1999.

The organic molecule used for forming the hydrophobic monolayer according to the present invention is preferably a molecule having one of the structures represented by the following Formulae (i) to (iii).

Organic molecule (i): having

(a) a functional group represented by the following General Formula (1) as the terminal bonding functional group capable of forming a covalent bond with the substrate:

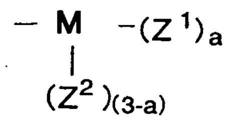

(1)

[in General Formula (1), M is Si, Ti, Al or Sn; $Z^1$ represents at least one atom or atomic group selected from the group consisting of F, Cl, Br, I, -OH, -SCN, - NCO, and alkoxy groups having 1 to 5 carbons; $Z^2$ represents at least one atom or atomic group selected from the group consisting of H and alkyl groups having 1 to 5 carbons; and a is an integer of 1 to 3];

(b) at least one characteristic group selected from the group consisting of methyl group, halogen-substituted methyl group, vinyl group, cyclic ether group having 2 to 4 carbons, phenyl group, halogen-substituted phenyl group, cyano group and the derivatives thereof as the terminal group not binding to the substrate; and

(c) a characteristic group represented by the following General Formula (2) between the two functional groups

$$-C_bE_{2b}- \qquad (2)$$

[in General Formula (2), E represents at least one atom selected from the group consisting of H and F; and b is an integer of 2 to 22].

Organic molecule (ii): having

(d) Si as the M represented by General Formula (1); and

(e) additionally at least one kind of bivalent characteristic group selected from the group consisting of the characteristic groups represented by the following General Formula (3), -O-, -COO-, $-C_6H_4-$ and the derivatives thereof between the carbons of the bivalent characteristic group represented by General Formula (2);

wherein, g and h in the following General Formula (3) each represent independently an integer of 1 to 3.

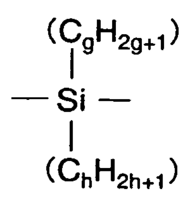

(3)

Organic molecule (iii): having

(f) a functional group represented by the following General Formula (4) as the terminal functional group forming a covalent bond with the substrate;

(g) two monovalent groups selected from the group consisting of methyl group, halogen-substituted methyl groups,

vinyl group, cyclic ether groups having 2 to 4 carbons, phenyl group, halogen-substituted phenyl groups, cyano group and the derivatives thereof as the terminal characteristic group not forming a covalent bond therewith; and (h) additionally a trivalent characteristic group represented by the following General Formula (5) between the two terminal groups.

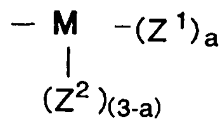

(4)

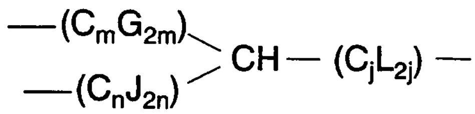

(5)

[General Formula (4) is identical with General Formula (1) of the organic molecule above; in General Formula (5), $C_jL_{2j}$ is a characteristic group bonding to the covalent-bonding terminal functional group; $C_mG_{2m}$ and $C_nJ_{2n}$ are characteristic groups bonding to the terminal group not forming a covalent bond; G, J and L may be the same or different from each other and each represent at least one atom selected from the group consisting of H and F; j is an integer of 1 to 18; and m and n each are independently an integer of 0 to 7.]

Examples of the covalent-bonding terminal functional groups represented by (1) in the organic molecules having the structures above include halogenated silyl groups, alkoxy silyl groups, isocyanate silyl groups, alkoxy aluminum groups, halogenated titanium groups, halogenated tin groups, and the like. It is particularly favorable if a=3, and preferable examples thereof include trihalogenated silyl groups, trialkoxysilyl groups, and triisocyanate silyl group.

The halogen atom in the trihalogenated silyl groups is F, Cl, Br, or I. Among trihalogenated silyl groups, chlorosilyl group is preferable. The alkoxy group in trialkoxysilyl groups is preferably a group having especially 1 to 3 carbons. Specific examples thereof include methoxysilyl group, ethoxysilyl group, and butoxysilyl group.

Organic silane compounds having one of the many substituted silyl groups at one of the terminal form a covalent bond with the substrate as described above, and the monolayers formed are more tightly bound to the substrate. Specifically, an organic molecule is covalently bound to the substrate via a siloxane bond (-Si-O-), by dehalogenation reaction if the organic molecule is a halogenated silyl group, by dealcoholization reaction if an alkoxy silyl group, and by isocyanate-removing reaction if an isocyanate silyl group. The covalent bond formed between the organic molecule and the substrate varies according to the kind of the group having an active hydrogen on the substrate surface, and when the group having an active hydrogen is, for example, an -NH group, -SiN bond is formed as the covalent bond.

Additionally, if the terminal bonding functional group is a multiply substituted silyl group, the silyl group forms covalent bonds at two sites or more, by forming covalent bonds by condensation reaction with the active hydrogen of the substrate not only at one substituent but also at the other substituents as shown in the following General Formula (6). If there is not a sufficient amount of bond-forming active hydrogens on the substrate surface, neighboring organic molecules may bind to each other.

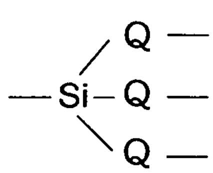

(6)

[in the General Formula (6), Q is at least one atom selected from O, N and S; and the Si is covalently bound via each element to the substrate or a neighboring organic silane group.]

In the organic molecule above, the bivalent characteristic group of General Formula (2) or the trivalent characteristic group of General Formula (5) preferably has the total number of the main chain at 8 or more and 24 or less, and preferably at 8 or more and 18 or less especially if the microchip is to be used in analytical instruments for analyzing biomacromolecules. Presence of a characteristic group having such a total number of carbons in between forces the molecule in the monolayer to orient itself vertically on the substrate, placing the hydrophobic non-covalent-bonding terminal characteristic group at the extreme surface and increasing the difference in hydrophilicity. In a similar manner to ordinary organic compounds, if there is a branched chain in the molecule, the main chain means the longest chain having a greater number of carbons.

Among the intermediate characteristic groups described above, $C_2H_4O$ group is preferable as the cyclic ether group having 2 to 4 carbons. If the organic compound has a $C_2H_4O$ group, the thickness of monolayer can be increased easily by using the ring-opening (addition) reaction of the epoxy groups. A sufficient uniformity in layer thickness can also be achieved easily at the same time.

For example, if the organic compound has a $C_2H_4O$ group at the terminal group not forming a covalent bond, it is possible to expand the thickness of the monolayer, by bringing an alcohol additionally to the monolayer formed, allowing the ring-opening (addition) reaction of the epoxy group to proceed, and thus binding connecting the portion of the alcohol other than -OH (hydrocarbon group) thereto.

Among the terminal characteristic groups not forming a covalent bond in the organic silane compound described above, $CF_3$-, $CH_2Br$-, and $CH_2Cl^-$ are preferable, and $CF_3$- is more preferable as the halogen-substituted methyl group, for the purpose of obtaining a sufficiently hydrophobic monolayer more reliably. Organic molecules having $CF_3$- as the terminal characteristic group are more easily oriented, raising the molecular density of organic compounds when they are aligned on the substrate while the monolayers are formed. Therefore, hydrophobic monolayers can be prepared more reliably.

In the present invention, the organic molecule having a structure represented by (i) is preferably at least one organic molecule selected from the group consisting of the compounds represented by the following General Formulae (20) to (29) and the derivatives thereof.

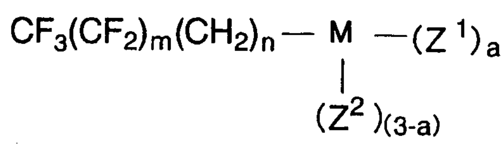

···(20)

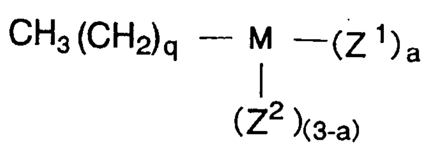

···(21)

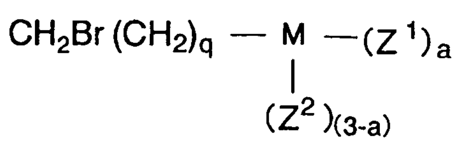

···(22)

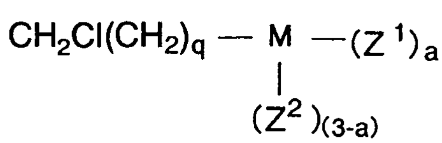

···(23)

$$CH_2=CH(CH_2)_q-\underset{(Z^2)_{(3-a)}}{\underset{|}{M}}-(Z^1)_a \qquad \cdots(24)$$

$$NC(CH_2)_q-\underset{(Z^2)_{(3-a)}}{\underset{|}{M}}-(Z^1)_a \qquad \cdots(25)$$

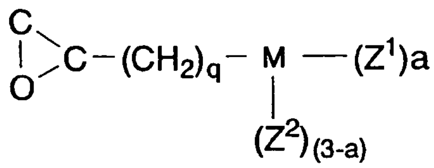

$\cdots(26)$

$$C_6H_5(CH_2)_q-\underset{(Z^2)_{(3-a)}}{\underset{|}{M}}-(Z^1)_a \qquad \cdots(27)$$

$$C_6F_5(CH_2)_q-\underset{(Z^2)_{(3-a)}}{\underset{|}{M}}-(Z^1)_a \qquad \cdots(28)$$

$$C_6F_5(CF_2)_m(CH_2)_n-\underset{(Z^2)_{(3-a)}}{\underset{|}{M}}-(Z^1)_a \qquad \cdots(29)$$

In General Formulae (20) to (29), M, $Z^1$, $Z^2$, and a are the same as those in General Formula (1) of the organic molecule (i) above; q is an integer of 2 to 22. m and n each are an integer satisfying at the same time the conditions shown in the following Formulae (I) to (III): $0 \leq m \leq 14$... (I); $0 \leq n \leq 15$... (II); and $2 \leq (m+n) \leq 22$... (III).

The organic molecule having a structure of (ii) is preferably at least one organic molecule selected from the group consisting of the compounds represented by the following General Formulae (30) to (39) and the derivatives thereof.

$$CF_3(CF_2)_r(CH_2)_sA(CH_2)_p-\underset{(Z^2)_{(3-a)}}{\underset{|}{Si}}-(Z^1)_a \qquad \cdots(30)$$

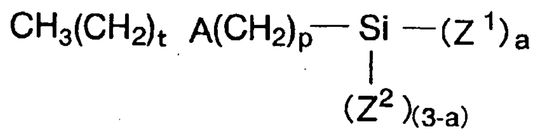 ···(31)

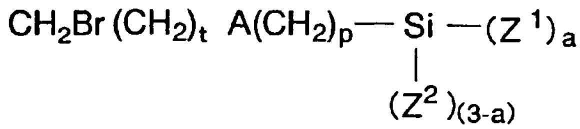 ···(32)

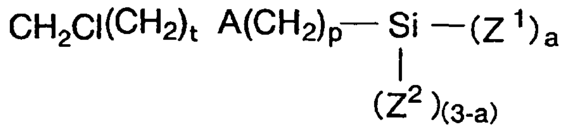 ···(33)

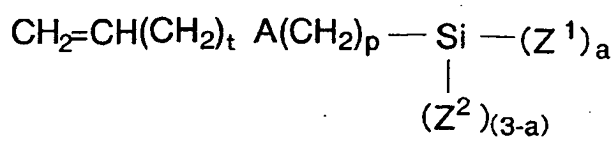 ···(34)

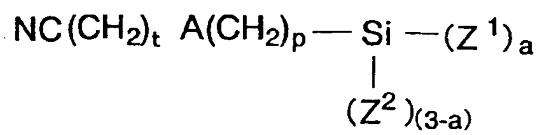 ···(35)

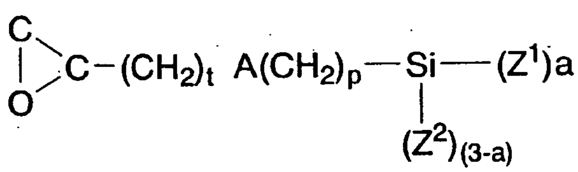 ···(36)

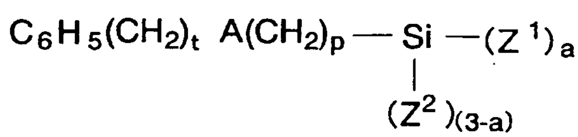 ···(37)

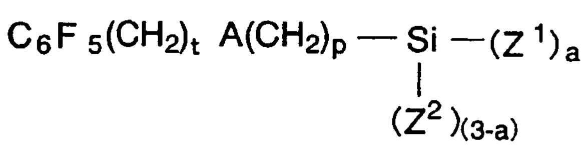 ···(38)

$$C_6F_5(CF_2)_r(CH_2)_sA(CH_2)_p-\underset{\displaystyle (Z^2)_{(3-a)}}{\underset{|}{Si}}-(Z^1)_a \quad \cdots(39)$$

In General Formulae (30) to (39), $Z^1$, $Z^2$ and a are the same as those in General Formula (1) of the organic molecule (i) above; A represents at least one bivalent characteristic group selected from the group consisting of characteristic groups represented by General Formula (3), -O-, -COO-, $-C_6H_4-$ and the derivatives thereof; t is an integer of 1 to 10; p is an integer of 1 to 18; r and s each are an integer satisfying at the same time the conditions shown by the following Formulae (IV) to (VI): $0 \leq r \leq 14$... (IV); $0 \leq s \leq 15$... (V); and $2 \leq (r+s) \leq 22$... (VI).

The organic molecule having the structure of (iii) is preferably at least one organic molecule selected from the group consisting of the compounds represented by the following General Formulae (40) to (49) and the derivatives thereof.

$$\left.\begin{array}{l} CF_3(CF_2)_r(CH_2)_s \\ CF_3(CF_2)_r(CH_2)_s \end{array}\right> CH(CH_2)_p-\underset{\displaystyle (Z^2)_{(3-a)}}{\underset{|}{M}}-(Z^1)_a \quad \cdots(40)$$

$$\left.\begin{array}{l} CH_3(CH_2)_t \\ CH_3(CH_2)_t \end{array}\right> CH(CH_2)_p-\underset{\displaystyle (Z^2)_{(3-a)}}{\underset{|}{M}}-(Z^1)_a \quad \cdots(41)$$

$$\left.\begin{array}{l} CH_2Br(CH_2)_t \\ CH_2Br(CH_2)_t \end{array}\right> CH(CH_2)_p-\underset{\displaystyle (Z^2)_{(3-a)}}{\underset{|}{M}}-(Z^1)_a \quad \cdots(42)$$

$$\left.\begin{array}{l} CH_2Cl(CH_2)_t \\ CH_2Cl(CH_2)_t \end{array}\right> CH(CH_2)_p-\underset{\displaystyle (Z^2)_{(3-a)}}{\underset{|}{M}}-(Z^1)_a \quad \cdots(43)$$

$$\left.\begin{array}{l} CH_2{=}CH(CH_2)_t \\ CH_2{=}CH(CH_2)_t \end{array}\right> CH(CH_2)_p-\underset{\displaystyle (Z^2)_{(3-a)}}{\underset{|}{M}}-(Z^1)_a \quad \cdots(44)$$

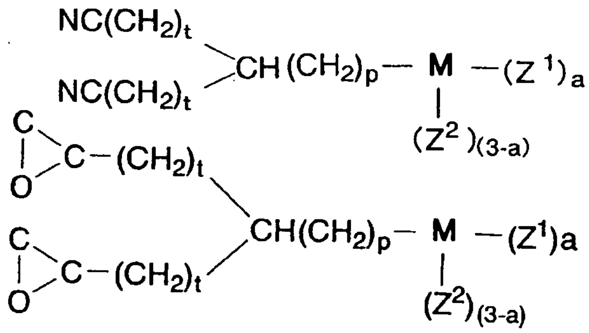

···(45)

···(46)

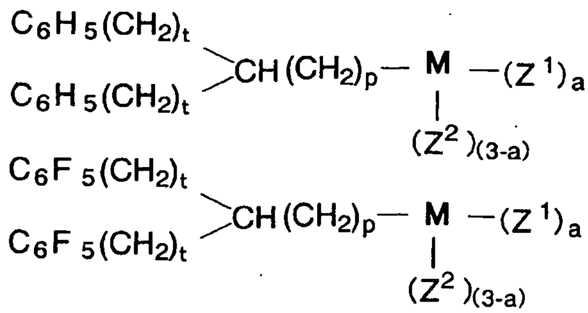

···(47)

···(48)

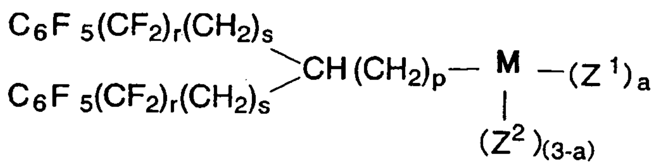

···(49)

In General Formulae (40) to (49), M, $Z^1$, $Z^2$ and a are the same as those in General Formula (1) of the organic molecule (i) above; t is an integer of 1 to 10. p is an integer of 1 to 18; r and s each are an integer satisfying at the same time the conditions shown by the following Formulae (IV) to (VI): $0 \leq r \leq 14$... (IV); $0 \leq s \leq 15$... (V); and $2 \leq (r+s) \leq 22$... (VI).

Among the organic molecules represented by General Formulae (20) to (29), organic molecules represented by General Formulae (20) and (21) are preferable, from the viewpoints of ensuring the uniformity of monolayer and the molecular density of organic compounds aligned on the regions surrounding the areas storing liquids when monolayers are formed.

From the same viewpoint as above, among the organic molecules represented by General Formula (20), the organic molecule represented by the following Formulae (201) to (203) are preferable:

$$CF_3(CF_2)_7(CH_2)_2SiCl_3 \quad (201)$$

$$CF_3(CF_2)_7(CH_2)_2Al(OCH_3)_3 \quad (202)$$

$$CF_3(CF_2)_7(CH_2)_2TiCl(CH_3)_2 \quad (203)$$

Further, from the same viewpoint as above, among the organic molecules represented by General Formula (21), the organic molecules represented by the following Formulae (211) to (214) are preferable:

$$CH_3(CH_2)_7(CH_2)_2SiCl_3 \quad (211)$$

$$CH_3(CH_2)_7AlCl(OC_2H_5)_2 \quad (212)$$

$$CH_3(CH_2)_7TiCl(C_3H_7)_2 \quad (213)$$

$$CH_3(CH_2)_4SnCl(C_3H_7)_2 \quad (214)$$

Further, among the organic molecules represented by General Formulae (30) to (39), organic molecules represented by General Formulae (30) and (31) are preferable, from the viewpoints of ensuring the uniformity of monolayer and the molecular density of organic compounds aligned on the regions surrounding the areas storing liquids when monolayers are formed.

From the same viewpoint as above, among the organic molecules represented by General Formula (30), the organic molecules represented by the following Formulae (301) to (306) are preferable:

$$CF_3(CF_2)_3(CH_2)_20(CH_2)_{15}SiCl_3 \quad (301)$$

$$CF_3COO(CH_2)_{15}SiCl_3 \quad (302)$$

$$CF_3(CF_2)_3(CH_2)_2Si(CH_3)_2(CH_2)_9SiCl_3 \quad (303)$$

$$CF_3(CF_2)_7Si(CH_3)_2(CH_2)_9SiCl_3 \quad (304)$$

$$CF_3(CH_2)_2Si(CH_3)_2(CH_2)_{15}SiCl_3 \quad (305)$$

$$CF_3CH_2O(CH_2)_{15}SiCl_3 \quad (306)$$

From the same viewpoint as above, among the organic molecules represented by General Formula (31), the organic molecules represented by the following Formulae (307) to (312) are preferable:

$$CH_3(CH_2)_3(CH_2)_2O(CH_2)_{15}SiCl_3 \quad (307)$$

$$CH_3COO(CH_2)_{15}SiCl_3 \quad (308)$$

$$CH_3(CH_2)_3(CH_2)_2Si(CH_3)_2(CH_2)_9SiCl_3 \quad (309)$$

$$CH_3(CH_2)_7Si(CH_3)_2(CH_2)_9SiCl_3 \quad (310)$$

$$CH_3(CH_2)_2Si(CH_3)_2(CH_2)_{15}SiCl_3 \quad (311)$$

$$CH_3CH_2O(CH_2)_{15}SiCl_3 \quad (312)$$

Among the organic molecules represented by the Formulae above (201) to (203), (211) to (214), and (301)

to (312), the organic molecule represented by Formula (201) is most preferable. As organic molecules other than those described above, organic molecules described in Jpn. Unexamined Patent Publication Nos. 4-13267, 4-236466, 10-180179, and 4-359031 may be used in the range that provides the advantageous effects of the invention, the contents of which are hereby incorporated by reference.

Basically, commercially available reagents may be used as these compounds, but these compounds can be prepared easily by the following methods.

Commercially available reagents include, for example, decyltrichlorosilane manufactured by Aldrich and the like.

Typical examples of the production methods include the methods described in Jpn. Unexamined Patent Publication Nos. 2-138286 and 4-120082,the contents of which are hereby incorporated by reference.

Specifically, organic silane compounds represented by General Formula (20) are obtained in the process of reacting a terminal perfluoroalkyl halogen compound represented by the following General Formula:

$$F(CF_2)_\alpha(CH_2)_\beta X^1 \qquad (20a)$$

(in the General Formula (20a), $\alpha$ is an integer of 1 to 8; $\beta$ is an integer of 0 to 2; and $X^1$ represents a halogen atom of I, Br or Cl); and a Grignard reagent

$$X^2Mg(CH_2)_\gamma CH{=}CH_2 \qquad (20c);$$

prepared from a terminal alkenyl halide compound represented by the following General Formula:

$$X^2(CH_2)_\gamma CH{=}CH_2 \qquad (20b)$$

(in the General Formula (20b), $\gamma$ is an integer of 8 to 17; and $X^2$ is a halogen atom of I, Br or Cl)
to give a terminal perfluoroalkene compound represented by the following General Formula;

$$F(CF_2)_\alpha(CH_2)_{\beta+\gamma}CH{=}CH_2 \qquad (20d);$$

and
and a process of reacting
a terminal perfluoroalkene compound represented by General Formula (20d), and a hydrogen silane represented by the following General Formula:

$$HSi(CH_3)_\delta X^3{}_{3-\delta} \qquad (20e)$$

(in the General Formula (20e), $\delta$ is an integer of 0 to 2; and $X^3$ is a halogen atom of I, Br or Cl or an alkoxy group) in a hydrosilylation reaction.

The hydrosilylation reaction is preferably carried out in the presence of a platinum catalyst.

In addition, the trifluoroalkylsilane compound of General Formula (21) is obtained in the process of hydrosilylating the $\omega$-trifluoroalkene compound represented by the following General Formula:

$$CF_3(CH_2)_\varepsilon CH{=}CH_2 \qquad (21a)$$

(in the General Formula (21a), $\varepsilon$=is an integer of 7 to 16);
with the aforementioned hydrogen silane represented by the following General Formula

$$HSi(CH_3)_\delta X^3{}_{3-\delta} \qquad (21e)$$

The terminal perfluoroalkyl halogen compounds represented by General Formula (20a) are commercially

available short chain compounds and include, for example, $F(CF_2)_2CH_2Cl$, $F(CF_2)_2CH_2I$, $F(CF_2)_3I$, and $F(CF_2)_3CH_2Br$.

The terminal alkenyl halogenated compounds represented by General Formula (20b) include, for example, $Cl(CH_2)_{10}CH=CH_2$, $Cl(CH_2)_{14}CH=CH_2$, and $Br(CH_2)_{17}CH=CH_2$. The hydrogen silanes represented by General Formula (20e) include, for example, $HSiCl_3$, $HSi(CH_3)Cl_2$, $HSi(CH_3)_2Cl$, $HSi(OCH_3)_3$, and $HSiCH_3(OC_2H_5)_2$.

The Grignard reagents represented by General Formula (20c) are prepared, for example, by first placing magnesium metal in a reaction solvent such as diethylether, tetrahydrofuran, or the like, and then supplying a terminal alkenyl halogenated compound of General Formula (20b) into the solution, for example, at 50 to 60°C. The amount of magnesium metal is preferably equimolar to or slightly higher than that of the terminal alkenyl halogenated compound.

The terminal perfluoroalkene compound of General Formula (20d) is prepared by reacting the Grignard reagent of General Formula (20c) prepared with a terminal perfluoroalkyl halogen compound of General Formula (20a) at room temperature in Grignard reaction. In a similar manner to above, the aforementioned Grignard reagent is gradually added into a reaction solvent such as diethylether, tetrahydrofuran, or the like containing the terminal perfluoroalkyl halogen compound of General Formula (20a). Alternatively, the terminal perfluoroalkyl halogen compound may be added into a reaction solvent containing the Grignard reagent. Cu may also be added as a catalyst. After completion of the reaction, water is added to the reaction system, to dissolve the magnesium salt generated, and then the resulting organic and aqueous phases are separated. The terminal perfluoroalkene compound of General Formula (20d) is obtained after low-boiling compounds such as the reaction solvent and others are removed from the organic phase. If possible, the terminal perfluoroalkene compound may be purified by distillation.

The desired terminal perfluoroalkyl silane compound is obtained by reacting the terminal perfluoroalkene compound of General Formula (20d) and the hydrogen silane of General Formula (20e), for example, at about 100°C in hydrosilylation reaction.

In addition, the organic silane compound represented by General Formula (30) is typically prepared, for example, in the following process:

the organic silane compound represented by General Formula (30) is prepared, for example, by reacting a relatively cheaper commercial compound represented by the following General Formula (30a):

$$L\text{-}C_bE_{2b}\text{-}Si\ (C_gH_{2g+1})\ (C_hH_{2h+1})\ \text{-}Z^3 \qquad (30a)$$

[wherein, the terminal group L is at least one characteristic group selected from the group consisting of methyl group, halogen-substituted methyl groups, vinyl group, cyclic ether groups having 2 to 4 carbons, phenyl group, halogen-substituted phenyl groups, cyano group, and the derivative thereof; $C_bE_{2b}$ is the same as that in General Formula (2); $C_gH_{2g+1}$ and $C_hH_{2h+1}$ are the same as those in General Formula (3); and $Z^3$ is Cl or $OCH_3$.]
and the Grignard reagent represented by General Formula (30b):

$$CH_2=CH(CH_2)_\theta X^4 \qquad (30b)$$

[$\theta$ is an integer of 1 to 16; and $X^4$ is a halogen.]; to give compound represented by General Formula (30c):

$$L\text{-}C_bE_{2b}\text{-}Si(C_gH_{2g+1})(C_hH_{2h+1})\text{-}(CH_2)_\theta CH=CH_2 \qquad (30c);$$

and further reacting the compound above in hydrosilylation reaction with a hydrogen silane represented by General Formula (30d):

$$HSi(Z^1)_a(Z^2)_{3-a} \qquad (30d)$$

[$Z^1$, $Z^2$ and a are the same as those in General Formula (1).]

Silane compounds represented by General Formula (30a) include, for example, $CF_3(CH_2)_3(CH_3)_2SiCl$ and $CF_3(CH_2)_3(CH_3)_2SiOCH_3$.

The hydrosilylation reaction may be carried out at a reaction temperature of 50 to 150°C in the presence of a catalyst, under reflux if the reaction is an atmospheric reaction, or in a state sealed in an autoclave if it is a pressurized reaction, by reacting the equimolar amounts of terminal perfluoroalkene compound and the silicon compound, or by

reacting the terminal perfluoroalkene compound with an excessive amount of the silicon compound as needed for completion of the reaction, as terminal perfluoroalkene compounds are generally expensive,

Further, an inactive hydrocarbon solvent such as n-hexane, isooctane, toluene, xylene, or the like may be used as needed in the reaction. The product is sufficiently pure and usable when the low-boiling compounds including unreacted compounds, reaction solvents, and the like are stripped off after reaction, but may be further purified by distillation if the product is distillable.

Hereinafter, methods of producing the microchip according to the present invention by using the substrate and the organic molecule described above will be described.

A substrate inherently having a characteristic group with an active hydrogen may be used. Also, if the substrates does not have a sufficient amount of active hydrogens, a substrate of which the surface is provided before use with active hydrogens by surface treatment may be used. In particular, if a dense monolayer is desirably formed, the following surface treatment is preferable.

Methods of providing the substrate with active hydrogens include, for example, methods of oxidizing the surface chemically, treating with plasma in the presence of oxygen, and treating with ozone. The methods also include the method of hydrophilizing the substrate, for example, with $SiCl_4$, $HSiCl_3$, $SiCl_3O\text{-}(SiCl_2\text{-}O)\ \eta\ \text{-}SiCl_3$ (wherein, η is an integer of 0 to 6), $Si(OH)_4$, $HSi(OH)_3$, $Si(OH)_3O\text{-}(Si(OH)_2\text{-}O)\ \eta\ \text{-}Si(OH)_3$ (wherein, η is an integer of 0 to 6), or the like.

The method of oxidizing the surface will be described in more detail. The oxidation treatment may be performed, for example, by high-energy irradiation of the surface in the presence of oxygen and a hydrogen atom-supplying substance. For example, oxygen in air is decomposed by ultraviolet ray irradiation generating ozone, which in turn reacts with the hydrogen atom-supplying substance and generates active species having an active hydrogen. When the surface is irradiated with ultraviolet ray, covalent bonds among the atoms in the shallow surface of the material are cleaved, generating unbound atoms. Substrates having active hydrogens are obtained by the reaction of the unbound atoms with active species containing active hydrogens.

Water, ammonia, or the like, for example, is favorably used as the hydrogen atom-supplying substance, from the viewpoints of availability and convenience in handling. If water is used as the hydrogen atom-supplying substance, characteristic groups at least containing the structure represented by -OH are formed. Alternatively, if ammonia is used, characteristic groups at least containing the structure represented by -NH are formed. Corona treatment, plasma treatment, or the like may be used, replacing the ultraviolet-ray irradiation treatment.

Subsequently, area compatible with liquids and region less-compatible with liquids are formed by coating a certain region on the substrate with a monolayer in monolayer-forming process.

The monolayer is formed by bringing the organic molecule above into contact with the substrates having active hydrogens in the manner described above. Although the contact treatment may be carried out either in gas or liquid phase, liquid phase treatment is preferred because of simplicity in manufacture.

In the liquid phase treatment, the substrate is brought into contact with an organic molecule-containing solution, which is prepared by dissolving or suspending an organic molecule in a solvent. The solvent is preferably an aprotic solvent, and the moisture in the gas phase in contact with the organic molecule-containing solution is preferably controlled to a relative humidity of 35% or less, when expressed as a relative humidity at 22°C.

For ensuring production of a very thin monolayer uniform in thickness, moisture in the gas phase is preferably 25% or less, more preferably 5% or less, as expressed as a relative humidity at 22°C.

Further, the reaction container for use in the process is preferably a sealed system such as a glove box or the like. The constituent gas of the gas phase of which the moisture is controlled in the range above is preferably at least one gas selected from the group consisting of noble gases and nitrogen gas. However, air may be used under a condition that sufficiently suppresses oxidation of the organic molecule or aprotic solvent and oxidative degradation of the monolayer. For example, air may be used by properly adjusting the temperatures of the gas phase and organic molecule-containing solution, the concentration of the organic molecule, the contact time between the organic molecule and the substrate, and the like in the monolayer-forming process.

A monolayer is formed in such a contact process, and a favorable method usable in the process will be described below.

First, prepared is a resist pattern for covering the areas corresponding to dent bottom faces. The resist pattern can be formed easily by a common semiconductor film-producing technique. The substrate after the resist pattern is formed is then brought into contact with an organic molecule, and a monolayer is selectively coated only on the area not covered with the resist. Subsequently, the resist pattern is removed, forming 2 or more dent areas. The resist pattern may be either a positive or negative resist pattern.

The following method is preferably used as the method of bringing the substrate into contact with an organic molecule in the process above. That is, an organic molecule-containing solution is first prepared by adding the organic molecule above into an aprotic solvent. Then, the organic molecule-containing solution and the substrate after the resist pattern is formed are placed in a container such as a glove box or the like, wherein the moisture of the gas phase inside can be easily controlled in the range described above, and allowed to progress in condensation reaction.

The aprotic solvent to be used for preparation of the organic molecule-containing solution may be selected without restraint according to the kind of the organic molecule used if the solvent does not dissolve the resist pattern, but is preferably a fluorine-based solvent, from the viewpoint of ensuring easy and reliable production of monolayers thinner (0.5 nm to 50 nm) in thickness and excellent in thickness uniformity. The fluorine-based solvent is preferably a perfluorocarbon liquid or a hydrofluoroether liquid manufactured by Sumitomo 3M Limited. More specifically, "HFE-7200", "PF-5080", and "FC-77" (trade name) manufactured by Sumitomo 3M Limited are preferably, in view of various physical properties thereof including the boiling point suitable for use under the temperature condition of processing. The concentration of the organic compound in the organic molecule-containing solution is not particularly limited, but the concentration in the adsorption solution is preferably, for example, about $10^{-4}$ mol/L or more and more preferably $10^{-3}$ mol/L or more. The upper limit concentration is preferably about $10^{-1}$ mol/L. The contact time of the substrate with the organic molecule-containing solution is not particularly limited, but, for example, several seconds to 10 hours and preferably 1 minute to 1 hour. In addition, the temperature of the organic molecule-containing solution is, for example, 10 to 80°C and preferably in the range of 20 to 30°C.

The constituent gas of the gas phase of which the moisture is controlled in the range above is preferably at least one gas selected from the group consisting of noble gases and nitrogen gas. However, air may be used under a condition that sufficiently suppresses oxidation of the organic molecule or aprotic solvent and oxidative degradation of the monolayer.

After the monolayer is formed, the resist pattern may be removed, for example, by using acetone.

Methods of forming a monolayer on the substrate on which a resist pattern is formed are not particularly limited to the method above, and include, for example, printing method, transfer printing method, screen method, liquid-ejection method, ink-jet method, stamping method, and the like.

An example of other favorable method usable in the monolayer-forming process is described below.

First, a monolayer is formed on a substrate. The monolayer is preferably formed under the same condition as that in the process described above. That is, the monolayer is preferably formed in the process wherein an organic molecule-containing solution obtained by adding an organic molecule into an aprotic solvent and then the substrate and the solution are brought into contact with each other in a container such as a glove box or the like, allowing the condensation reaction to progress.

As no resist pattern is used here in this process of manufacture, the aprotic solvent to be used for preparing the organic molecule-containing solution may be selected arbitrarily according to the kind of the organic molecule, but is preferably a solvent that dissolves the organic molecule appropriately, from the viewpoint of ensuring easy and reliable production of monolayers thinner in thickness (0.5 nm to 50 nm) and excellent in the uniformity of layer thickness. Examples thereof include organic solvents such as hexadecane, chloroform, carbon tetrachloride, silicone oil, hexane, toluene, and the like. These solvents may be used alone or in combination of two or more solvents.

Among them, mixed solvents containing hexadecane, chloroform and carbon tetrachloride are preferable as the aprotic solvent. Use of the organic solvent in this manner prevents sufficiently, for example, the polymerization of the organic molecule due to the presence of water. The use of the organic solvent facilitates the condensation reaction between the terminal bonding functional group of organic molecule and the active hydrogens of substrate. In this manner, the organic molecules are bound to the substrate via covalent bonds [for example, siloxane bond (-Si-O-)], giving a monolayer.

Subsequently, a photomask for selective protection from energy such as ultraviolet ray is provided to the monolayer coated. The photomask has a configuration wherein when the photomask is placed between the light source of ultraviolet ray and the substrate having a monolayer formed, only the monolayer covering the areas corresponding to the dents of substrate is selectively irradiated with the ultraviolet ray. Ultraviolet ray is then irradiated via the photomask onto the substrate having a monolayer formed by using the photomask, and the monolayer covering the areas for storing liquid is selectively removed. In this manner, 2 or more dents are formed.

Alternatively, if a laser such as excimer laser or the like is used, for example, as the means for irradiating ultraviolet ray, a method of irradiating only particular areas of the monolayer locally by ultraviolet ray may also be used, replacing the method of using photomask. In addition, other methods such as electron beam irradiation treatment, corona treatment, plasma treatment, and the like, whereby only the monolayer covering the area for storing liquid can be removed selectively, may be used instead of using ultraviolet ray irradiation. These treatments are preferably carried out in the presence of oxygen.

The monolayer may be a single layer or a laminated layer having multiple layers. For example, after a monolayer is formed on a substrate as described above, the second monolayer may be formed thereon. In such a case, if there are no reactive functional groups on the surface of the first monolayer, active hydrogens may be provided by the surface treatment described above.

More specifically, if a terminal group not binding to a covalent bond of the first monolayer is a characteristic group containing a group having an unsaturated bond such as a vinyl group or the like, a characteristic group having at least the structure of -OH can be introduced by irradiating an energy beam such as electron beam, X ray, or the like

onto the surface of monolayer under an environment containing moisture and thus changing part of the unsaturated bond-containing group. If a characteristic group having a an unsaturated bond-containing group such as a vinyl group or the like is bound to the substrate, a characteristic group having at least the structure of -COOH can be introduced, for example, by immersing the substrate in an aqueous potassium permanganate solution and thus changing the structure of part of the unsaturated bond-containing group.

The thickness of the monolayer may be arbitrarily selected according to the kind (length) of organic molecule or by forming the laminated layer above; or adjusted, for example, by the method of binding additionally a less-compatible molecule to the terminal of the terminal functional group of the organic molecule constituting the monolayer after forming the first monolayer.

If the organic molecule constituting the monolayer has a double bond or triple bond with the terminal of the terminal functional group as shown in General Formula (24), the monolayer may be additionally brought into contact, for example, with a Grignard reagent (RMgX) after it is formed. The contact results in an addition reaction between the terminal functional group and RMgX, resulting in connection of the hydrocarbon group (R-) in RMgX to the terminal of the terminal functional group. In RMgX, R is an alkyl group, halogenated alkyl group, alkenyl group, or halogenated alkenyl group having 1 to 23 carbons; and X is a halogen (F, Cl, Br, or I).

Alternatively, if the organic molecule constituting the monolayer has an epoxy group as the terminal characteristic group as shown in General Formula (26), the monolayer may be additionally brought into contact with an alcohol (ROH) after it is formed. The contact allows progress of the ring-opening (addition) reaction of epoxy groups, resulting in connection of the "R group" in the alcohol (ROH) to the third characteristic group. In ROH, R is an alkyl group, halogenated alkyl group, alkenyl group, or halogenated alkenyl group having 1 to 23 carbons; and X is a halogen (F, Cl, Br, or I).

A desirable microchip is obtained if the substrate is hydrophilic after the monolayer is formed in the manner described above. If the hydrophilicity is not satisfactory or desirably increased, the hydrophilicity may be enhanced, for example, by the surface treatment selectively inside the areas for storing liquids.

In another preferred embodiment of the present invention, a hydrophilic monolayer is formed inside the areas capable of storing a liquid for the hydrophilic surface treatment.

Namely, in a similar manner to the aforementioned hydrophobic monolayer-forming process, a hydrophilic monolayer may be formed inside the areas capable of storing a liquid on the substrate. Favorably, the difference in hydrophilicity between the area for storing liquids and the surrounding hydrophobic monolayer formed increases further by the hydrophilic monolayer. Favorable, the sample in droplets is chemically bound to and immobilized on the hydrophilic monolayer.

In this embodiment, (A) an organic molecule having a terminal functional group capable of forming a covalent bond with a substrate and other terminal group hydrophile with a liquid, or (B) an organic molecule having a terminal functional group capable of forming a covalent bond with a substrate and other terminal group which can be modified to a hydrophilic group after the monolayer may be used.

Examples of the organic molecules (A) in the former group, which have a hydrophilic terminal group, include organic molecules represented by the following General Formula (50).

$$T^1\text{-}(C_\lambda H_{2\lambda})\text{-}Si\text{-}(Z^4)_\varphi(Z^5)_{3-\varphi} \qquad (50)$$

[$T^1$ is a CHO, COOH, OH, $NH_2$, COOR, $PO(OH)_2$, PO(OH), $SO_3H$, $SO_2H$ or SH group; $\lambda$ is a number required for making the total molecular length of the compound including the terminal functional group above shorter than or the same as the molecular length of the organic group that forms hydrophobic monolayer surrounding the areas on the substrate surface for storing the droplets; $Z^4$ represents an alkoxy groups having 1 to 5 carbons; $Z^5$ represents at least one atom or atomic group selected from the group consisting of H and alkyl groups having 1 to 5 carbons; and $\varphi$ is an integer of 1 to 3.]

The organic molecules include those wherein the terminal group not forming a covalent bond thereof is substituted with a group having an active hydrogen such as a hydroxyl, amino, or other group. These organic molecules are immobilized tightly on the substrate by forming a covalent bond when they are brought into contact with the substrate. Because the terminal group opposite to the covalent bond is a hydrophilic group, an aqueous solution when dropped on the substrate is placed only on the areas where the hydrophilic monolayer is formed.

In addition, spread of the droplets is suppressed, as the surrounding region is coated with a hydrophobic monolayer. Methods similar to the aforementioned hydrophobic monolayer-forming processes may be used as the hydrophilic monolayer-forming process above.

Organic molecules having a hydrophilic terminal group include the following compounds (501) to (508):

$$H_2N(CH_2)_3Si(OCH_3)_3 \quad (501)$$

$$OHC(CH_2)_3Si(OCH_2CH_3)_3 \quad (502)$$

$$HOOC(CH_2)_5Si(OCH_3)_3 \quad (503)$$

$$HO(CH_2)_5Si(OCH_3)_3 \quad (504)$$

$$H_3COOC(CH_2)_5Si(OCH_2CH_3)_3 \quad (505)$$

$$(OH)_2OP(CH_2)_3Si(OCH_3)_3 \quad (506)$$

$$HO_2S(CH_2)_3Si(OCH_3)_3 \quad (507)$$

$$HS(CH_2)_3Si(OCH_3)_3 \quad (508)$$

The latter organic molecules (B) of providing the monolayer with hydrophilicity includes a method of substituting the terminal group of a compound that is hydrophobic when prepared with a hydrophilic group by the aforementioned monolayer-forming process. For example, a hydroxyl group (-OH) may be introduced to an organic molecule having a double bond at the terminal, by irradiating the molecule with an energy beam such as electron beam, X ray, or the like under an environment containing moisture. It is also possible to introduce a carbonyl group (-COOH), for example, by immersing the substrate in an aqueous potassium permanganate solution. If the compound has, for example, a cyano group (-CN group), the cyano group may be converted to an amino group by reducing it in a lithium aluminum hydride solution. Alternatively, the ring-opening reaction of an epoxy group may also be used.

Such organic molecules include those represented by the following General Formula (60):

$$T^2\text{-}(C_\nu H_{2\nu})\text{-}Si\text{-}(Z^6)_\rho(Z^7)_{3-\rho} \quad (60)$$

[wherein, $T^2$ represents a vinyl, methyl, halogenated methyl, epoxy, or cyano group; v is a number required for making the total molecular length of the compound including the terminal functional group above shorter than or the same as the molecular length of the organic group that forms hydrophobic monolayer surrounding the areas on the substrate surface for storing the droplets; $Z^6$ represents at least one atom or atomic group selected from the group consisting of F, Cl, Br, I, -OH, -SCN, -NCO, and alkoxy groups having 1 to 5 carbons; $Z^7$ represents at least one atom or atomic group selected from the group consisting of H and alkyl groups having 1 to 5 carbons; and p is an integer of 1 to 3.]

Covalent bonds are formed and thus a monolayer is formed by bringing the organic molecule having the terminal group above into contact with the substrate. For example, if the terminal group is a double bond, the terminal double bond can be converted into a hydrophilic carboxyl group by bringing the compound into contact with an aqueous potassium permanganate solution.

The organic compounds capable of providing a hydrophilic group at the terminal include the following organic molecules (601) to (603):

$$CH_2{=}CH(CH_2)_6Si(OCH_3)_3 \quad (601)$$

$$CH_3C_6H_4Si(OCH_3)_3 \quad (602)$$

$$ClCH_2C_6H_4Si(OCH_3)_3 \quad (603)$$

The total carbon numbers of of the organic compound above present between the terminal bonding functional group capable of forming a covalent bond and the hydrophilic terminal group should be properly determined so that the molecular length of the organic molecule becomes shorter than that of the less-compatible monolayer surrounding the area where the organic molecule is coated as a monolayer.

If a hydrophilic monolayer described above is formed, the degree of hydrophilicity is determined relative to the surrounding hydrophobic monolayer, and thus the hydrophilic monolayer preferably has a greater critical surface energy than that of the hydrophobic monolayer. For example, if a liquid containing water is used, the critical surface energy thereof is preferably more than 20 mN/m, more preferably 60 mN/m or more, and more preferably 75 mN/m or less.

If a surface treatment is carried out by using the organic molecule described above, the hydrophilic monolayer may be formed after a hydrophobic monolayer is formed or in advance to formation of a hydrophobic monolayer.

Accordingly, since a monolayer of the present invention may be changed the compatibility with a liquid, the region surrounding the liquid-storing areas can be coated with a monolayer less-compatible with the liquid properly according to the liquid to be placed. Therefore, even if the liquid to be placed is not an aqueous solution, the present invention may be used in an analogous manner for placing the liquid in particular areas by using the difference in affinity to the liquid.

In any of the processes above, any publicly known linker may be connected to the bottom face of the areas for storing liquid for immobilizing the probe.

In the processes above, the microchip according to the present invention wherein the certain regions are surrounded by a hydrophobic monolayer which is less compatible with the liquid to be placed can be produced.

In addition to the methods of forming a monolayer directly on the substrate described above, the processes of manufacturing include a method of forming a layer for immobilizing probes on the areas capable of storing a liquid after formation of a monolayer and coating a monolayer over the regions surrounding the liquid-storing areas above on the substrate surface in an analogous manner. It is also possible to produce multi-layer microchips by using the substrate produced as described above only as the top layer and laminating it with other substrates.

Hereinafter, described is a method of analyzing a gene by using the microchip according to the present invention and immobilizing a single-strand DNA (probe) complementary to the target gene thereon.

The "probes" in the present invention are, for example, probes specified in JIS K 3600 2392. Specific examples of the probes include cDNAs prepared from the mRNAs of target genes, those designed and synthesized based on the amino acid sequences of proteins, and the like.

The probes that form a hybrid with the analytes are preferable. Examples of these probes include oligonucleotide, polynucleotide, cDNA, genome DNA, single-strand DNA, RNA, the labeled derivatives thereof, antigen, antibody, oligopeptide, polypeptide, and the like.

Among them, the probe is preferably at least one compound selected from the group consisting of polynucleotides and labeled polynucleotides. The probe selected from the group consisting of polynucleotides and labeled polynucleotides may be a polymer prepared by a pure chemical method or by a biochemical method.

In regard to the other probes above, if the analyte is an enzyme, a substrate for the enzyme, for example, may be used as the probe. Alternatively if the analyte is a substrate, the corresponding enzyme may be used as the probe. The kinds of analytes are not particularly limited, and examples thereof include nucleic acids such as DNAs and RNAs, proteins, lipids, and the like, and samples to be handled include, for example, biological samples such as blood, cell, and the like; synthetic samples such as nucleic acid, protein, and the like.

In measurement, a single-strand DNA is first immobilized in each predetermined area. The immobilization method is not particularly limited, and any one of the publicly known methods commonly used in DNA analysis may be applied. Examples thereof include methods of synthesizing a DNA (oligonucleotide) directly on the bottom face of the areas where the probe is to be immobilized (e.g., Affimetrix method), first binding a linker to the bottom face and then a single-strand DNA to the linker, binding a functional group for immobilization onto surface to the terminal of a single-strand DNA and the functional group for immobilization to the surface, and the like. The linkers are not particularly limited, and include amino, carboxyl, and other groups. The linker and the functional group for immobilization can be bound to the probe or the surface by any one of the methods known in the art.

When the microchip according to the present invention is used for the tests using DNA probes, the volume of each dent described above may be $2\times10^{-6}$ to 1 pL. In the present invention, even though the volume is extremely small, these minute dents provide a sufficiently high analytical sensitivity, as the regions surrounding the dents are coated with a hydrophobic monolayer.

Then, a droplet containing an analyte for measurement is placed in the dent. At that time, the total volume of

the aqueous solution containing a probe (reaction field) and the aqueous solution containing a sample is preferably 0.01 to 1,000 pL. The reduction in the volume of the droplet used leads to decrease of the contamination between the neighboring dents and thus increase in analytical accuracy even when the density of dents is 10,000 /$cm^2$ or more. Use of a high-density spotter is preferable for dropping such a small amount of droplet.

Figure 4 is a schematic view illustrating an apparatus for dropping droplets containing the above probe at high density onto the substrate according to the present invention.

As shown in Figure 4, droplet-supplying unit 40 of analytical instrument 101 has a configuration that allows the droplet-supplying unit to drop multiple droplets into dents 3 in the same row at the same time, among dents 3 two-dimensionally distributed on the microchip. Namely, five nozzles are aligned on a line in parallel with the row of dents 3 in droplet-supplying unit 40. The distance between the central axes of five nozzles is adjusted to be identical with the distance between the centers of the bottom faces of five dents 3 in the same row. In this way, droplets ejected from respective ejection apertures of the five nozzles (not shown in the Figure) land on the center of the bottom faces of dents 3.

Although not shown in the Figure, a CPU is electrically connected to droplet-supplying unit 40 and controls the position of the nozzles of droplet-supplying unit 40 relative to that of dents 3 based on the standard data for positioning, and a control unit therein controls the amount of the droplet ejected from each nozzle.

Target DNAs contained in droplet may be labeled with a fluorescent dye such as Cy3 or the like, and a fluorescent intercalater such as SYBR-Green or the like may be added to the droplet or dent. Then, an excitation beam is irradiated into the dent. Then, if a double-strand DNA is formed by hybridization of the single-strand DNA immbolizied on the bottom face of dents and the target DNAs, fluorescence is emitted from the fluorescent intercalater embedded therein or the fluorescent dye labeled on the target DNA.

For example, when SYBR-Green is used, SHG laser having a wavelength of 473 nm may be irradiated. The fluorescence generated is detected by a photoelectric conversion unit. As described above, as the dents can be formed at extremely high density, in analytical instruments using the substrate according to the invention, the number of samples that can be analyzed at a time on a single substrate increases drastically, even if the analytical instrument is as large as the conventional analytical instruments.

Single-strand nucleic acids complementary to target genes are exemplified as the probes to be immobilized, but the probes are not limited thereto and include those described above. For example, if an antigen (or antibody) to which a function of generating fluorescence by antigen-antibody reaction is granted is used as the probe, it is possible to sense the reaction thereof with antibodies (or antigens) in sample.

From the viewpoints of easiness in providing a minute amount of droplets, the accuracy of the amount of droplet supplied, and the speed of supplying the droplets, an ink-jet method (e.g., method of using a piezoelectric device or of using gas expansion by heating) is preferable as the method for supplying droplets containing a desirable analyte into dents. For example, even in the methods of using ink jet, it is sometimes necessary to further reduce the amount of the analyte-containing solution used, if the analysis demands use of expensive and rare analytes such as those used in DNA gene analysis and protein analysis. In such a case, it is possible to adopt the ink-jet method without use of a liquid container, of inserting the tip of an ink-jet nozzle into the solution containing an analyte every time when measurement is made, absorbing the analyte-containing solution into the tip portion of the nozzle in the required amount, and ejecting the droplet from the nozzle into a dent. In addition, it is possible to adopt the method of using a microdispenser or a micropipette.

In another embodiment of the present invention, the microchip described above may be combined with a publicly known detection means to form a microchip module.

Hereinafter, the present invention will be described in more detail with reference to EXAMPLES, but the structure, production process, and material according to the present invention may be modified arbitrarily, and it should be understood that the present invention is not limited to the structure, production process, and material set forth below. In addition, the terms here are only used for the purpose of describing specific embodiments and should not be considered to be restrictive, as the scope of the invention is restricted only by the claims attached and the equivalents thereof.

EXAMPLE

EXAMPLE 1.

A hard-glass substrate of 30 mm in length and width for chemical experiments, manufactured by DAICO MFG Co. Ltd., was available. The glass substrate was washed with pure water and air-dried, then washed with ethanol and air-dried, and washed with ultraviolet-ray and ozone. The resulting glass substrate was stored in a desiccator.

In glove box to which a dry nitrogen gas is supplied, an organic silane compound $CF_3(CF_2)_7(CH_2)_2SiCl_3$ was dissolved in hydrofluoroether (trade name: HFE7100, manufactured by Sumitomo 3M Limited) placed in a reaction

container previously dried sufficiently at a concentration of 1.0 % by weight, to give a solution.

The glass substrate washed as above and a washing solution to be used after a monolayer is formed (hydrofluoroether; trade name: HFE7100, manufactured by Sumitomo 3M Limited) are placed respectively in the glove box wherein the reaction solution was prepared, and dried sufficiently as exposed to the dry state for 30 minutes. However, this condition is only an example and is confirmed empirically to vary significantly according to the environment of production site and the condition of glove box, supplied gas, and the like.

A solution containing the organic silane compound above was poured into a beaker, and then the glass substrate was immersed in and thus brought into contact with the solution under a relative humidity of 5% at room temperature for 30 minutes. The reaction solution may be stirred during immersion for acceleration of the reaction, but care should be given to the damage on glass substrate.

The glass substrate was then immersed in the washing solution prepared in the glove box at room temperature and shaken therein for removal of the reaction solution attached to the glass substrate. The washing may be done by stirring the washing solution.

In this EXAMPLE, two containers containing the washing solution were prepared, and the glass substrate was washed twice in separate containers for prevention of reattachment of the organic silane compound removed by washing. The washing periods were respectively 10 minutes.

After washing, the glass substrate was dried sufficiently in the glove box and removed therefrom.

Presence of a monolayer formed by binding of the organic silane compound to the glass substrate was confirmed by using a Fourier transform infrared spectrometer (apparatus: FTIR-5000, manufactured by Shimadzu Co.; spectroscopic method: multiple external reflection type; resolution: 4 $cm^{-1}$; detecting instrument: high-sensitivity MCT; and integration number: 5000). The spectrogram was shown in Figure 5.

As shown in Figure 5, asymmetric and symmetric stretching vibrations of the C-H bonds in $-CH_2-$ group were confirmed at wave numbers of 2930 and 2860 $cm^{-1}$, indicating that the glass substrate was coated with the desirable monolayer.

Subsequently, a photomask for pattern test manufactured by Matsushita Electric Co., Ltd., wherein vacant patterns of 60 μm in length and 20 μm in width were distributed for dent formation (pattern density: 37,000 /$cm^2$), was made available and placed on the glass substrate having the monolayer formed. Ultraviolet ray (light source: 95-W lamp, manufactured by Ushio INC.; and wavelength: 245nm) was irradiated through the photomask at a temperature of 22°C for 2 minutes.

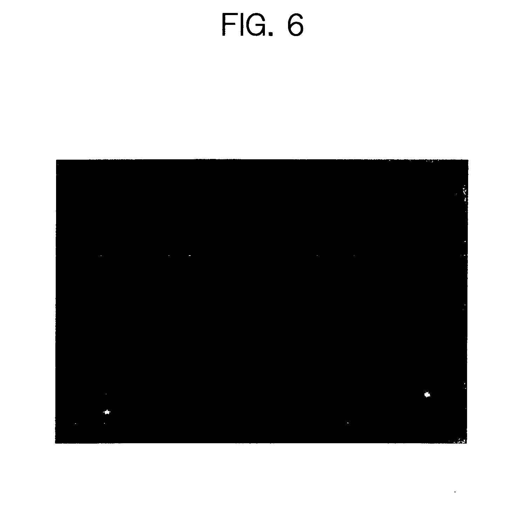

Onto the microchip thus prepared, 900 pL of a commercially available aqueous DNA solution (containing a fluorescence-labeled single-strand oligonucleotide, manufactured by Wako Chemical Ltd.; and concentration: 20 weight %) was dropped and the shape of the droplet on the microchip was observed. The microgram is shown in Figure 6. As shown in Figure 6, the solution was confirmed to be placed only on the areas for storing a liquid of the substrate surface where the hydrophobic monolayer is not formed, and the shape of the solution governed by the pattern formed. In addition, the accommodated droplet had almost hemispherical shape, and a part of droplet was protruded from the opening of the dent formed. Further, none of the solution was observed to be attached on the region where the monolayer was formed.

These results indicated that it was possible to obtain uniform reaction fields and that the area of the reaction field did not expand even if the volume of the droplet, i.e., reaction field, was increased. Further, the fact that the solution did not attach to the less-compatible region (hydrophobic region) indicated that the microchip thus prepared did not cause contamination between the neighboring reaction fields and were protected from decrease in analytical accuracy.

EXAMPLE 2.

A glass substrate washed and dried in a similar manner to EXAMPLE 1 and a solution containing an organic silane compound were prepared.

A positive resist (trade name: OFPR 5000, manufactured by Tokyo Ohka Kogyo Co., Ltd.) was coated on the glass substrate by a spin coater to give a resist film having a thickness of 1.0 μm.

The resist-coated surface was irradiated via a photomask with ultraviolet ray and then treated with a developing solution (trade name: NMD-3) specified by Tokyo Ohka Kogyo Co., Ltd., to form a resist pattern. In the resist pattern, the diameter of the bottom faces of the dents to be formed was 6.0 μm; the distance between respective dents, 4.0 μm; and the density of dents, 1,000,000 /$cm^2$.

In a similar manner to EXAMPLE 1, the resist-patterned glass substrate was immersed in and brought into contact with a solution containing an organic silane compound at room temperature for 30 minutes, to form a monolayer on the substrate.

After washing and drying, the resist pattern was removed with acetone, to give a microchip having dents for storing a liquid.

In a similar manner to EXAMPLE 1, formation of the monolayer on the substrate was confirmed by using a

Fourier transform infrared absorption spectrometer.

Although a positive resist was used in the example above, a negative resist may be used instead, if the resist does not dissolve or swell in the contact solution. In addition, depending on the kinds of the resist or the process of forming resist pattern, it would be necessary to change properly the conditions for the baking process used in ordinary photoprocess.

In a similar manner to EXAMPLE 1, an aqueous DNA solution was dropped onto the microchip above and the shape of the droplets was observed. The solution was confirmed to be placed only on the areas of the substrate surface where the hydrophobic monolayer is not formed, and the shape of the solution governed by the pattern formed. In addition, the accommodated droplet had almost hemispherical shape, and a part of droplet was protruded from the opening of the dent formed. Further, none of the solution was observed to be attached on the region where the monolayer was formed.

EXAMPLE 3

A glass substrate whereon a predetermined pattern of dents (diameter: 400 μm; the distance between respective dents: 730 μm; and density of dents: 78 /cm$^2$) was formed was used as the substrate.
In a similar manner to EXAMPLE 1, a monolayer was formed over the entire glass substrate including the dents.
A photomask containing the patterns identical in size to the dents of substrate was placed on the monolayer, the substrate was irradiated with ultraviolet ray, and the monolayer on predetermined areas was removed in a similar manner to EXAMPLE 1, to give a microchip.

An aqueous DNA solution was dropped on the microchip above in a similar manner to EXAMPLE 1, and the shape of the resulting droplets was observed. The solution was confirmed to be placed only on the areas for storing a liquid of the substrate surface where the hydrophobic monolayer is not formed, and the shape of the solution governed by the pattern formed. In addition, the accommodated droplet had almost hemispherical shape, and a part of droplet was protruded from the opening of the dent formed. Further, none of the solution was observed to be attached on the region where the monolayer was formed.

EXAMPLE 4.

Inner surface of the dents on the microchip prepared in EXAMPLE 1 was hydrophilized.

A microchip was prepared by forming a monolayer on the surface of the substrate of EXAMPLE 1 and washed and dried in a similar manner to the glass substrate of EXAMPLE 1.
Then, the monolayer described above was coated over the dents in a similar manner to EXAMPLE 1 except that $CH_2=CH(CH_2)_6SiCl_3$ was used replacing the organic silane compound used in EXAMPLE 1.

Subsequently, the substrate having the monolayer prepared above was immersed in an aqueous potassium permanganate solution (concentration: 45.6 mmol/L) placed in a separable flask, and the mixture was heated from 30°C to 80°C and allowed to be oxidized for 18 hours.

In this way, carboxyl groups were introduced to the terminal double bond portions of the monolayer, and a hydrophilic monolayer was formed on the inner surface of the dents.

An aqueous DNA solution was dropped on the microchip above in a similar manner to EXAMPLE 1, and the shape of the droplets was observed. The solution was confirmed to be placed only on the areas for storing a liquid of the substrate surface where the hydrophobic monolayer is not formed, and the shape of the solution governed by the pattern formed. In addition, the accommodated droplet had almost hemispherical shape, and a part of droplet was protruded from the opening of the dent formed. Further, none of the solution was observed to be attached on the region where the monolayer was formed.

EXAMPLE 5.

In a similar manner to EXAMPLE 4, the bottom face of the dents on the microchip prepared in EXAMPLE 1 was hydrophilized.
The dent bottom face was coated with the monolayer above, in a similar manner to EXAMPLE 4 except that $NC(CH_2)_6SiCl_3$ was used replacing the organic silane compound used in EXAMPLE 4,

Then, the substrate having the monolayer prepared as described above is placed in a separable flask, into which a diethylether solution of $LiAlH_4$ (concentration: 100 mmol/L) was added while stirring and cooling in an ice bath. $H_2SO_4$ (100 mmol) was added gradually, and the resulting mixture was stirred at room temperature for 1 hour for reduction.

In this way, terminal cyano groups were converted to amino groups, giving a hydrophilic monolayer was formed on the inner surface of dents. Formation of the hydrophilic monolayer inside the dents for storing a liquid was confirmed

by the fact that the substrate had a critical surface energy improved from that of the glass substrate before treatment.

In a similar manner to EXAMPLE 1, an aqueous DNA solution was dropped on the microchip above, and the shape of the droplets was observed. The solution was confirmed to be placed only on the areas for storing a liquid of the substrate surface where the hydrophobic monolayer is not formed, and the shape of the solution governed by the pattern formed. In addition, the accommodated droplet had almost hemispherical shape, and a part of droplet was protruded from the opening of the dent formed. Further, none of the solution was observed to be attached on the region where the monolayer was formed.

EXAMPLE 6.

A microchip was prepared in a similar manner to EXAMPLE 1 except that $CH_3(CH_2)_5SiCl_3$ was used replacing the organic silane compound used for preparing the microchip of EXAMPLE 1.

In a similar manner to EXAMPLE 1, an aqueous DNA solution was dropped on the microchip above, and the shape of the droplets was observed.

The solution was confirmed to be placed only on the areas for storing a liquid of the substrate surface where the hydrophobic monolayer is not formed, and the shape of the solution governed by the pattern formed. In addition, the accommodated droplet had almost hemispherical shape, and a part of droplet was protruded from the opening of the dent formed. Further, none of the solution was observed to be attached on the region where the monolayer was formed.

EXAMPLE 7.

A microchip was prepared in a similar manner to EXAMPLE 2 except that $CH_3(CH_2)_{20}SiCl_3$ was used as the organic silane compound in preparation of the microchip of EXAMPLE 2.

An aqueous DNA solution was dropped on the microchip above in a similar manner to EXAMPLE 1, and the shape of the droplets was observed. The solution was confirmed to be placed only on the areas for storing a liquid of the substrate surface where the hydrophobic monolayer is not formed, and the shape of the solution governed by the pattern formed. In addition, the accommodated droplet had almost hemispherical shape, and a part of droplet was protruded from the opening of the dent formed. Further, none of the solution was observed to be attached on the region where the monolayer was formed.

EXAMPLE 8

A polypropylene substrate was made available, replacing the glass substrate of EXAMPLE 1.

The substrate was processed at 0.5 kW for 6 seconds by using an atmospheric pressure plasma discharge device manufactured by Kasuga Denki Inc., and the resulting surface was provided with active hydrogens such as hydroxyl and carboxyl groups by exposure to air.

After measurement, the critical surface energies of the surface-treated glass substrate per se before and after the treatment were respectively 30 mN/m and 54 mN/m. The increase in hydrophilicity after treatment confirmed that the amount of active hydrogens was increased.

A microchip was prepared in a similar manner to EXAMPLE 1 except that the substrate above was used.

An aqueous DNA solution was dropped on the microchip above in a similar manner to EXAMPLE 1, and the shape of the droplets was observed. The solution was confirmed to be placed only on the areas for storing a liquid of the substrate surface where the hydrophobic monolayer is not formed, and the shape of the solution governed by the pattern formed. In addition, the accommodate droplet had almost hemispherical shape, and a part of droplet was protruded from the opening of the dent formed. Further, none of the solution was observed to be attached on the region where the monolayer was formed.

EXAMPLE 9.

In a similar manner to EXAMPLE 4, the internal surface of the dents on the microchip prepared in EXAMPLE 1 was hydrophilized.

The inner surface of the dents was coated with the monolayer above, in a similar manner to EXAMPLE 4 except that $H_2N(CH_2)_3Si(OCH_3)_3$ was used replacing the organic silane compound used in EXAMPLE 4.

In this way, a hydrophilic monolayer was formed on the dent bottom face. Formation of the hydrophilic monolayer on the dent bottom face was confirmed by the fact that the glass substrate had a critical surface energy improved from that of the glass substrate before treatment.

An aqueous DNA solution was dropped on the microchip above in a similar manner to EXAMPLE 1, and the

shape of the droplets was observed. The solution was confirmed to be placed only on the areas for storing a liquid of the substrate surface where the hydrophobic monolayer is not formed, and the shape of the solution governed by the pattern formed. In addition, the accommodate droplet had almost hemispherical shape, and a part of droplet was protruded from the opening of the dent formed. Further, none of the solution was observed to be attached on the region where the monolayer was formed.

This EXAMPLE is advantageous in that no oxidation or reduction treatment is required for granting the substrate with hydrophilicity.

The evaluation results of the respective microchips prepared above are summarized in TABLE 1. The critical surface energy was determined as follows:

[Critical surface energy]

By using the wettability standard solutions Nos. 31, 36, 41, 46, and 54 manufactured by Nakarai Tesque, Inc., and an ion-exchange water, the critical surface energy was determined at room temperature, by dropping 0.4 ml of each standard solution on a sample; measuring the static contact angle of the resulting droplet by using an automatic contact angle meter manufactured by Kyowa Surface Science Co., Ltd.; plotting the energies of the standard solutions on the Y axis against the values of cosine contact angle on the X axis; and extrapolating the line to the energy at a cosine contact angle of 0. The contact angles at eight sites on the same microchip were determined, and the average of the contact angles excluding the maximum and minimum values was used as the contact angle. The critical surface energy of the hydrophilic layer formed inside dents was determined by using a sample separately prepared having only a hydrophilic monolayer, as the dents are very minute.

As described above, with respect to the microchip according to the present invention, because a monolayer less compatible with the liquid described above than the aforementioned areas capable of storing a liquid is formed on the regions of the substrate surface surrounding liquid-storing areas, for example, various reagent solutions and solvents used during preparation of microchips, and liquid samples and reagent solutions or solvents during use of microchips are confined in the liquid-storing areas above, and do not spread to the surrounding region on the microchip according to the present invention, consequently providing high analytical sensitivity even when the areas are very minute.

In addition, because the monolayer is less compatible with solutions than the areas capable of storing a liquid, the solutions do not spread onto the monolayer, sufficiently preventing contamination thereof by the solutions spotted on other areas. As the substrate is coated with a monolayer, it is also possible to form a layer uniform in thickness and to reduce the fluctuation in the volume of dents, thus allowing improvement in analytical accuracy.

Additionally, as the layer on the substrate is a monolayer, the thickness thereof is at a nano order, allowing production of extremely thin substrates in contrast to resin matrices. As the layer is a monolayer, there are no problems in visual observation or in optical analysis. Further, in contrast to the metal matrices wherein the substrate surface is coated by vapor deposition or the like or the resin matrices wherein the substrate surface is coated by solidification, the monolayer according to the present invention is bound to the substrate via extremely strong covalent bonds, eliminating the problem of peeling off during handling.

According to the process of manufacture of the present invention, it is possible to form covalent bonds between a substrate and a monolayer, by bringing the aforementioned organic molecule into contact with the substrate having active hydrogens. In the present invention, as the monolayer above has these advantageous effects, if the monolayer less-compatible as described above is formed on the substrate, it becomes possible, for example, to produce extremely minute analytical units, flow channels or the like and eliminate the aforementioned problems caused by contamination associated with miniaturization and fluctuation in layer thickness or the like.

Therefore, use of the microchip according to the present invention as DNA chips, integrated microchips, and the like realizes miniaturization of various microchips and enables effective use of minute samples, and thus is extremely useful in the fields of medicine, drug discovery, analysis, and the like.

This application is based on Japanese Patent Application No.2003-303419 filed on August 27, 2003, the contents of which are hereby incorporated by references.

TABLE 1

| | | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 |
|---|---|---|---|---|---|---|---|---|---|---|
| Substrate | Kind | Glass | Glass | Glass | Glass | Glass | Glass | Glass | PP | Glass |
| | Surface treatment | No | No | No | No | No | No | No | Yes | No |
| | Critical surface energy (mN/m) | 72 | 70 | 70 | 72 | 70 | 70 | 72 | 54 | 70 |
| Dent | Hydrophilization | No | No | No | Yes | Yes | No | No | No | Yes |
| | Internal critical surface energy (mN/m) | 72 | 70 | 70 | 48 | 64 | 70 | 72 | 54 | 70 |
| Unimolecular film | Critical surface energy (mN/m) | 12 | 14 | 14 | 12 | 14 | 24 | 20 | 12 | 14 |
| Contamination | | No | No | No | No | No | No | No | No | No |

A microchip comprising a substrate and a plurality of areas capable of storing a liquid containing at least one of sample, reagent and solvent thereon, wherein: regions surrounding said areas capable of storing a liquid on the surface of said substrate are coated with a monolayer; said monolayer is more less-compatible with a liquid than the areas capable of storing a liquid; and said monolayer is connected to said substrate via a covalent bond, enabling analysis superior in sensitivity and accuracy and miniaturization of analytical instruments.

## Claims

**1.** A microchip comprising a substrate and a plurality of areas thereon capable of storing a liquid containing at least one of a sample, a reagent and a solvent, wherein:

regions surrounding said areas capable of storing a liquid on the surface of said substrate are coated with a monolayer;
said monolayer is less compatible with the liquid than the areas capable of storing a liquid; and
said monolayer is connected to said substrate via a covalent bond.

**2.** The microchip according to Claim 1, wherein the entire regions of said substrate surface excluding said areas capable of storing a liquid is coated with said monolayer.

**3.** The microchip according to Claim 1 or 2, wherein the number of said areas capable of storing a liquid formed in the unit area of said substrate surface is 10,000 $/cm^2$ or more.

**4.** The microchip according to any one of Claims 1 to 3, wherein said monolayer is a laminated layer of two or more layers.

**5.** The microchip according to any one of Claims 1 to 4, wherein said liquid is a solution containing a probe; and the regions of said substrate surface surrounding the areas for storing said solution containing a probe or the entire regions excluding the areas for storing said solution containing the probe is coated with said monolayer.

**6.** The microchip according to Claim 1, wherein the plurality of areas capable of storing a liquid and grooves as flow channels connecting at least part of the plurality of areas capable of storing a liquid are formed on said substrate; and the regions on said substrate surface surrounding said areas capable of storing a liquid and the grooves are coated with said monolayer.

**7.** The microchip according to Claim 6, wherein the entire regions on the surface of said substrate excluding said areas capable of storing a liquid and the grooves are coated with said monolayer.

**8.** The microchip according to any one of Claims 1 to 7, wherein the covalent bond formed between said monolayer and said substrate is at least one bond selected from the group consisting of M-O, M-N, and M-S bonds (M is Si, Ti, Al or Sn).

**9.** The microchip according to any one of Claims 1 to 8, wherein:

said monolayer is connected to said substrate by forming at least one covalent bond selected from the group consisting of M-O, M-N, and M-S bonds (M is Si, Ti, Al or Sn); and
said monolayer comprises an organic group having

(i) a terminal group not bound to the substrate that is at least one characteristic group selected from the group consisting of methyl group, halogen-substituted methyl group, vinyl group, cyclic ether group having 2 to 4 carbons, phenyl group, halogen-substituted phenyl group, cyano group and the derivatives thereof and
(ii) a bivalent characteristic group represented by General Formula (S1) between said covalent bond and the terminal group:

$$-C_bE_{2b}- \quad \text{(S1)}$$

[ in the General Formula (S1), E represents at least one atom selected from the group consisting of H and F; and b is an integer of 2 to 22]

**10.** The microchip according to Claim 9, wherein:

the covalent bond between said monolayer and said substrate is at least one covalent bond selected from the group consisting of Si-O, Si-N, and Si-S bonds; and
said monolayer comprises an organic group having additinally at least one bivalent characteristic group selected from the group consisting of characteristic groups represented by the following General Formula (S2), -O-, -COO-, $-C_6H_4-$ and the derivative thereof between the carbons constituting the carbon backbone of the bivalent characteristic group represented by General Formula (S1).

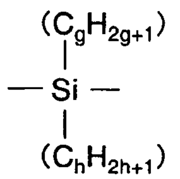
(S 2)

[in General Formula (S2), g and h each independently represent an integer of 1 to 3]

**11.** The microchip according to any one of Claims 1 to 8, wherein:

said monolayer is connected to the substrate by forming at least one covalent bond selected from the group consisting of M-O, M-N, and M-S bonds (M is Si, Ti, Al or Sn); and
said monolayer comprises an organic group having

(i) a terminal group not bound to said substrate that is at least one characteristic group selected from the group consisting of methyl group, halogen-substituted methyl group, vinyl group, cyclic ether group having 2 to 4 carbons, phenyl group, halogen-substituted phenyl group, cyano group and the derivative thereof and
(ii) a trivalent characteristic group represented by the following General Formula (S3) between the covalent bond and the terminal group not bound to said substrate.

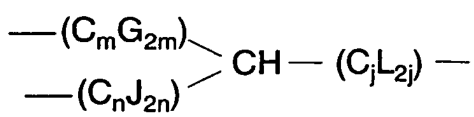
(S 3)

[in General Formula (S3), $C_jL_{2j}$ represents a characteristic group binding to the atom represented by said M; $C_mG_{2m}$ and $C_nJ_{2n}$ represent characteristic groups binding to the terminal group not bound to said substrate; G, J and L each represents independently at least one atom selected from the group consisting of H and F; j is an integer of 1 to 18; and m and n each are independently an integer of 0 to 7]

**12.** The microchip according to any one of Claims 9 to 11, wherein:

the carbon number of the main chain of said bivalent characteristic group of General Formula (S1) or said trivalent characteristic group of General Formula (S3) is 8 or more and 18 or less.

**13.** A microchip comprising a substrate and a plurality of areas capable of storing a liquid containing at least one of a sample, a reagent and a solvent thereon, wherein:

regions surrounding said areas capable of storing a liquid on the surface of said substrate is coated with a monolayer;
said monolayer is less compatible with a liquid than the areas capable of storing a liquid;
said monolayer is connected to said substrate via a covalent bond; and
the difference in affinity with a liquid between said monolayer and said areas capable of storing a liquid is sufficiently large for preventing contamination between neighboring reaction fields when the reaction fields are formed by storing a liquid.

**14.** A microchip comprising a substrate and a plurality of areas capable of storing a liquid containing at least one of a sample, a reagent and a solvent thereon, wherein:

regions surrounding said areas capable of storing a liquid on the surface of said substrate is coated with a monolayer;
said monolayer is less compatible than the areas capable of storing a liquid;
said monolayer is connected to said substrate by bringing an organic molecule into contact with said substrate and forming a covalent bond; and
said organic molecule has a first terminal group capable of forming a covalent bond with an active hydrogen on said substrate surface and a second terminal group less-compatible with a liquid.

**15.** A process of manufacturing a microchip having a substrate and a plurality of areas capable of storing a liquid containing at least one of a sample, a reagent and a solvent thereon, comprising the steps of:

providing an organic molecule containing a bonding functional group capable of forming a covalent bond with an active hydrogen on said substrate surface at a terminal and a terminal group less-compatible with said liquid at the other terminal;
contacting said organic molecule with regions having the active hydrogen on said substrate; and
selectively connecting a monolayer less-compatible with said liquid to the regions on said substrate surface surrounding the areas capable of storing a liquid by forming the covalent bond in reaction of said terminal bonding functional group of the organic molecule and said active hydrogen of the substrate.

**16.** The process of manufacturing a microchip according to Claim 15, wherein the monolayer less-compatible with said liquid is selectively formed on the regions on said substrate surface surrounding the areas capable of storing a liquid by forming patterns for selectively forming said monolayer on said substrate by a resist pattern,
bringing said organic molecule into contact with said substrate whereon the resist pattern is formed, and then removing said resist pattern.

**17.** The process of manufacturing a microchip according to Claim 15, wherein the monolayer less-compatible with said liquid is selectively formed by connecting the monolayer to said substrate surface, irradiating said monolayer formed with energy, and removing only the monolayer in the irradiated area.

**18.** The process of manufacturing a microchip according to Claim 15, wherein grooves as flow channels connecting at least part of a plurality of areas capable of storing a liquid are formed on said substrate; and the regions on said substrate surface surrounding said areas capable of storing a liquid and the grooves are coated with said monolayer by bringing both the area and grooves into contact with said organic molecule.

**19.** The process of manufacturing a microchip according to any one of Claims 15 to 18, wherein said monolayer is connected by chemical adsorption method.

**20.** The process of manufacturing a microchip according to any one of Claims 15 to 19, wherein said organic molecule has

(i) as the terminal bonding functional group capable of forming the covalent bond with the substrate, a functional group represented by the following General Formula (S4):

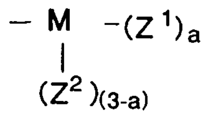

(S 4)

[in General Formula (S4), M is Si, Ti, Al or Sn; $Z^1$ represents at least one atom or atomic group selected from the group consisting of F, Cl, Br, I, -OH, - SCN, -NCO, and alkoxy group having 1 to 5 carbons, $Z^2$ represents at least one atom or atomic group selected from the group consisting of H and alkyl group having 1 to 5 carbons; and a is an integer of 1 to 3],

(ii) a terminal group thereof not binding to the substrate is at least one characteristic group selected from the group consisting of methyl group, halogen-substituted methyl group, vinyl group, cyclic ether group having 2 to 4 carbons, phenyl group, halogen-substituted phenyl group, cyano group and the derivatives thereof,

(iii) a bivalent characteristic group represented by the following General Formula (2) being present between the two terminal groups

$$-C_bE_{2b}- \qquad (S5)$$

[in General Formula (S5), E represents at least one atom selected from the group consisting of H and F; and b is an integer of 2 to 22].

**21.** The process of manufacturing a microchip according to Claim 20, wherein M represented by General Formula (S4) is Si, and at least one bivalent characteristic group selected from the group consisting of the characteristic groups represented by the following General Formula (S6), -O-, -COO-, $-C_6H_4-$ and the derivatives thereof is additionally bound between the carbons constituting the carbon backbone of the bivalent characteristic group represented by General Formula (S5).

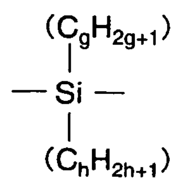

(S 6)

[in General Formula (S6), g and h each independently represents an integer of 1 to 3]

**22.** The process of manufacturing a microchip according to any one of Claims 15 to 19, wherein said organic molecule has

(i) as the terminal bonding functional group capable of forming a covalent bond with the substrate, a functional group represented by the following General Formula (S7):

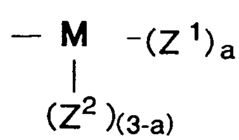

(S 7)

[in General Formula (S7), M is Si, Ti, Al or Sn;$Z^1$ represents at least one atom or atomic group selected from

the group consisting of F, Cl, Br, I, -OH, - SCN, -NCO, and alkoxy group having 1 to 5 carbons; $Z^2$ represents at least one atom or atomic group selected from the group consisting of H and alkyl group having 1 to 5 carbons; and a is an integer of 1 to 3],

(ii) a terminal group thereof not binding to the substrate is at least one characteristic group selected from the group consisting of methyl group, halogen-substituted methyl group, vinyl group, cyclic ether group having 2 to 4 carbons, phenyl group, halogen-substituted phenyl group, cyano group and the derivatives thereof, and

(iii) additionally a trivalent characteristic group represented by the following General Formula (S8) being present between the two terminal groups:

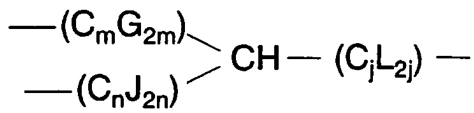

(S 8)

[in General Formula (S8), $C_jL_{2j}$ is a characteristic group binding to said M; $C_mG_{2m}$ and $C_nJ_{2n}$ are characteristic group binding to the terminal group not binding to the substrate; G, J and L each independently represent at least one atom selected from the group consisting of H and F; j is an integer of 1 to 18; m and n each independently represent an integer of 0 to 7.]

**23.** The process of manufacturing a microchip according to any one of Claims 15 to 22, wherein the terminal bonding functional group of said organic molecule forming the covalent bond with the substrate is a halogenated silyl group, alkoxy silyl group or isocyanate silyl group, and the reaction between said terminal bonding functional group and said substrate surface is a dehydrochlorination reaction, dealcoholization reaction or isocyanate-removing reaction.

**24.** The process of manufacturing a microchip according to any one of Claims 15 to 19, wherein said organic molecule is at least one organic molecule selected from the group consisting of the following General Formulae (S20) to (S29) and the derivatives thereof.

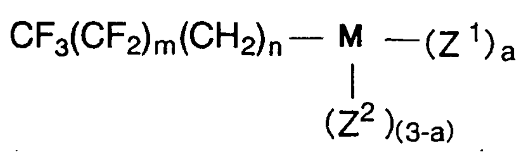

(S 2 0)

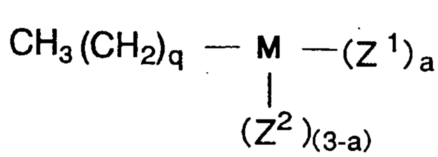

(S 2 1)

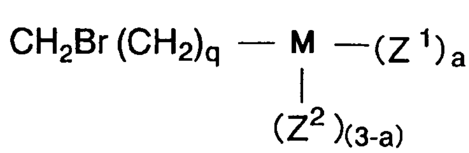

(S 2 2)

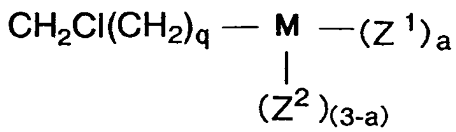

(S 2 3)

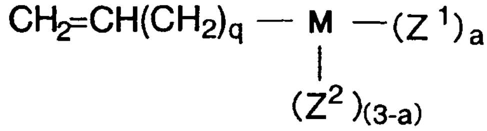

(S 2 4)

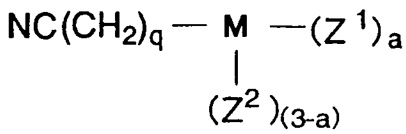

(S 2 5)

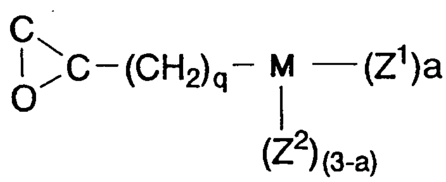

(S 2 6)

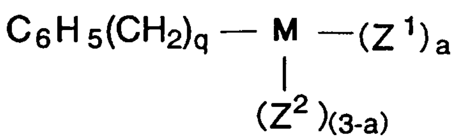

(S 2 7)

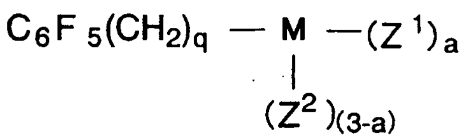

(S 2 8)

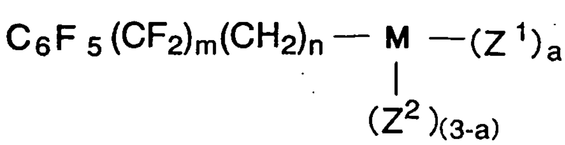

(S 2 9)

[in General Formulae (S20) to (S29), M is Si, Ti, Al or Sn; $Z^1$ represents at least one atom or atomic group selected from the group consisting of F, Cl, Br, I, -OH, -SCN, -NCO, and alkoxy group having 1 to 5 carbons; $Z^2$ represents at least one atom or atomic group selected from the group consisting of H and alkyl group having 1 to 5 carbons; a is an integer of 1 to 3; q is an integer of 2 to 22; m and n each satisfy at the same time the conditions represented by the following Formulae (I) to (III):

$$0 \leq m \leq 14 \qquad (I);$$

$$0 \leq n \leq 15 \qquad (II);$$

and

$$2 \leq (m+n) \leq 22. \qquad (III)]$$

**25.** The process of manufacturing a microchip according to any one of Claims 15 to 19, wherein said organic molecule is at least one organic molecule selected from the group consisting of the organic compounds represented by the following General Formulae (S30) to (S39) and the derivatives thereof.

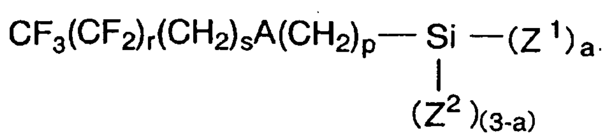

(S30)

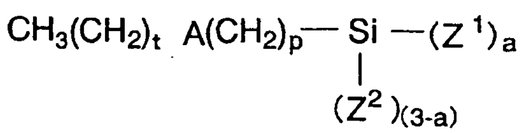

(S31)

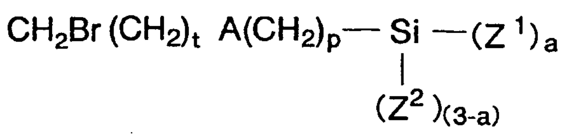

(S32)

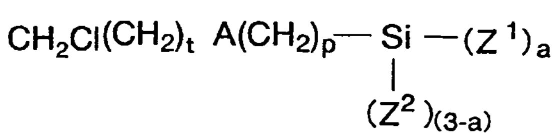

(S33)

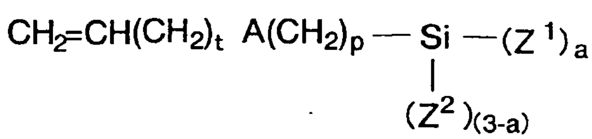

(S34)

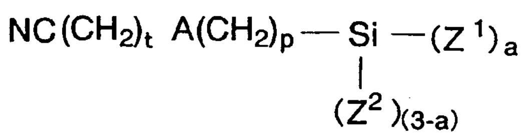

(S35)

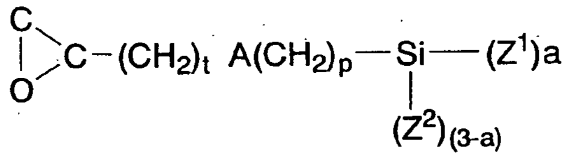

(S36)

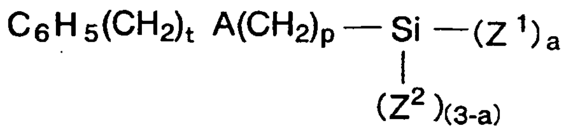

(S37)

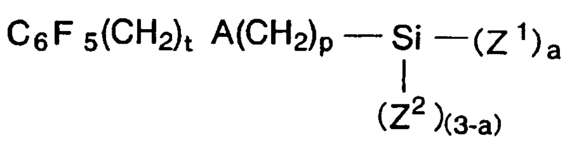

(S38)

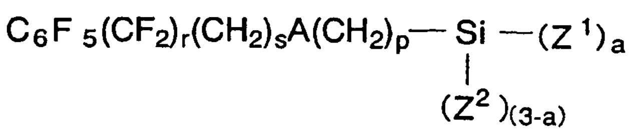

(S39)

[in General Formulae (S30) to (S39), $Z^1$ represents at least one atom or atomic group selected from the group consisting of F, Cl, Br, I, -OH, -SCN, - NCO, and alkoxy group having 1 to 5 carbons; $Z^2$ represents at least one atom or atomic group selected from the group consisting of H and alkyl group having 1 to 5 carbons; a is an integer of 1 to 3; A represents at least one bivalent characteristic group selected from the group consisting of characteristic groups represented by the following General Formula (S9):

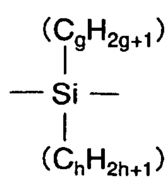

(S9)

[in General Formula (S9), g and h each independently an integer of 1 to 3.]
, -O-, -COO-, $-C_6H_4-$ and the derivatives thereof, t is an integer of 1 to 10; p is an integer of 1 to 18; and r and s each satisfy at the same time the conditions represented by the following Formulae (IV) to (VI):

$$0 \leq r \leq 14 \quad \text{(IV);}$$

$$0 \leq s \leq 15 \quad \text{(V);}$$

and

$$2 \leq (r+s) \leq 22. \qquad (VI)]$$

**26.** The process of manufacturing a microchip according to any one of Claims 15 to 19, wherein said organic molecule is at least one organic molecule selected from the group consisting of the organic compounds represented by the following General Formulae (S40) to (S49) and the derivatives thereof.

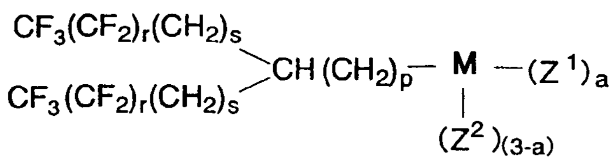

(S 4 0)

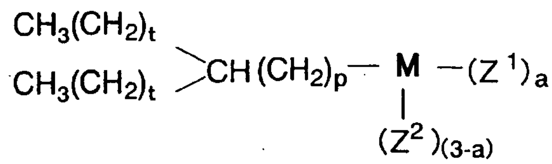

(S 4 1)

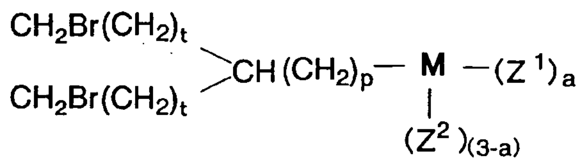

(S 4 2)

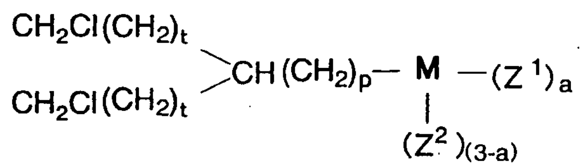

(S 4 3)

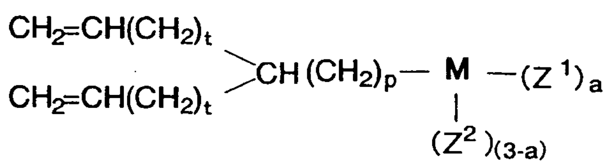

(S 4 4)

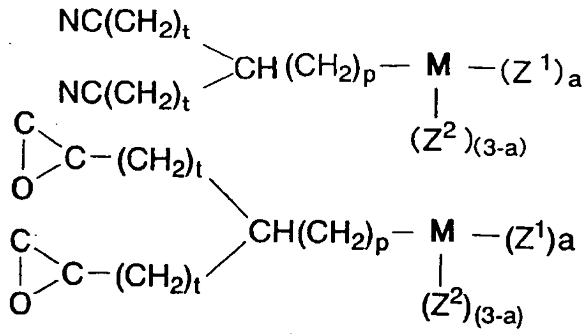

(S 4 5)

(S 4 6)

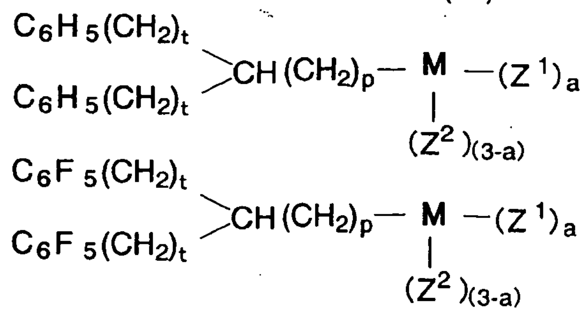

(S 4 7)

(S 4 8)

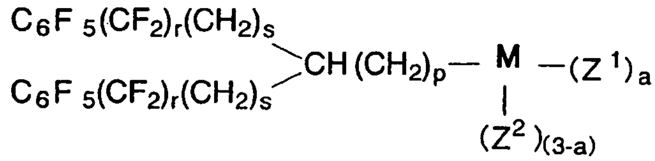

(S 4 9)

[in General Formulae (S40) to (S49), M is Si, Ti, Al or Sn; $Z^1$ represents at least one atom or atomic group selected from the group consisting of F, Cl, Br, I, -OH, -SCN, -NCO, and alkoxy group having 1 to 5 carbons; $Z^2$ represents at least one atom or atomic group selected from the group consisting of H and alkyl group having 1 to 5 carbons; a is an integer of 1 to 3; t is an integer of 1 to 10; p is an integer of 1 to 18; and r and s each satisfy at the same time the conditions represented by the following Formulae (IV) to (VI):

$$0 \leq r \leq 14 \qquad \text{(IV);}$$

$$0 \leq s \leq 15 \qquad \text{(V);}$$

and

$$2 \leq (r+s) \leq 22 \qquad \text{(VI)].}$$

**27.** The process of manufacturing a microchip according to any one of Claims 15 to 19, wherein said organic molecule is at least one selected from the group consisting of the following organic molecules.

$$CF_3(CF_2)_7(CH_2)_2SiCl_3$$

$$F(CF_2)_4(CH_2)_2O(CH_2)_{15}SiCl_3$$

$$CF_3COO(CH_2)_{15}SiCl_3$$

$$F(CF_2)_4(CH_2)_2Si(CH_3)_2(CH_2)_9SiCl_3$$

$$F(CF_2)_8Si(CH_3)_2(CH_2)_9SiCl_3$$

$$CF_3(CH_2)_2Si(CH_3)_2(CH_2)_{15}SiCl_3$$

$$CF_3CH_2O(CH_2)_{15}SiCl_3$$

$$CH_3(CH_2)_7(CH_2)_2SiCl_3$$

$$H(CH_2)_4(CH_2)_2O(CH_2)_{15}SiCl_3$$

$$CH_3COO(CH_2)_{15}SiCl_3$$

$$H(CH_2)_4(CH_2)_2Si(CH_3)_2(CH_2)_9SiCl_3$$

$$H(CH_2)_8Si(CH_3)_2(CH_2)_9SiCl_3$$

$$CH_3(CH_2)_2Si(CH_3)_2(CH_2)_{15}SiCl_3$$

$$CH_3CH_2O(CH_2)_{15}SiCl_3$$

$$CF_3(CF_2)_7(CH_2)_2TiCl(CH_3)_2$$

$$CF_3(CF_2)_7(CH_2)_2TiCl(C_3H_7)_2$$

$$CH_3(CH_2)_7AlCl(OC_2H_5)_2$$

$$CF_3(CF_2)_2(CH_2)_2Al(OC_2H_5)_3$$

$$CF_3(CF_2)_7(CH_2)_2Al(OCH_3)_3$$

$$CF_3(CH_2)_4SnCl(C_3H_7)_2$$

**28.** The process of manufacturing a microchip according to Claim 15, wherein said substrate is provided with the active hydrogen by surface treatment before said monolayer is formed.

**29.** The process of manufacturing a microchip according to Claim 28, wherein said the surface treatment providing the active hydrogen is energy ray irradiation.

**30.** A analytical method for analyzing biomacromolecules by dropping a preadjusted aqueous solution containing a

probe onto a microchip by high-density spotting, wherein said microchip has a plurality of areas on the substrate that provide reaction fields by storing droplets containing the aqueous solution, regions surrounding the areas storing the droplets on the surface of said substrate are coated with a monolayer less-hydrophile with said droplet, said monolayer is connected to said substrate via a covalent bond, the number of the areas capable of storing said liquid formed per unit area of said substrate surface is 10,000 /$cm^2$ or more, and the analysis is performed by dropping the droplet, and forming a reaction field, in a total amount of 0.01 to 1,000 pL on said area for storing the droplet.

FIG.1

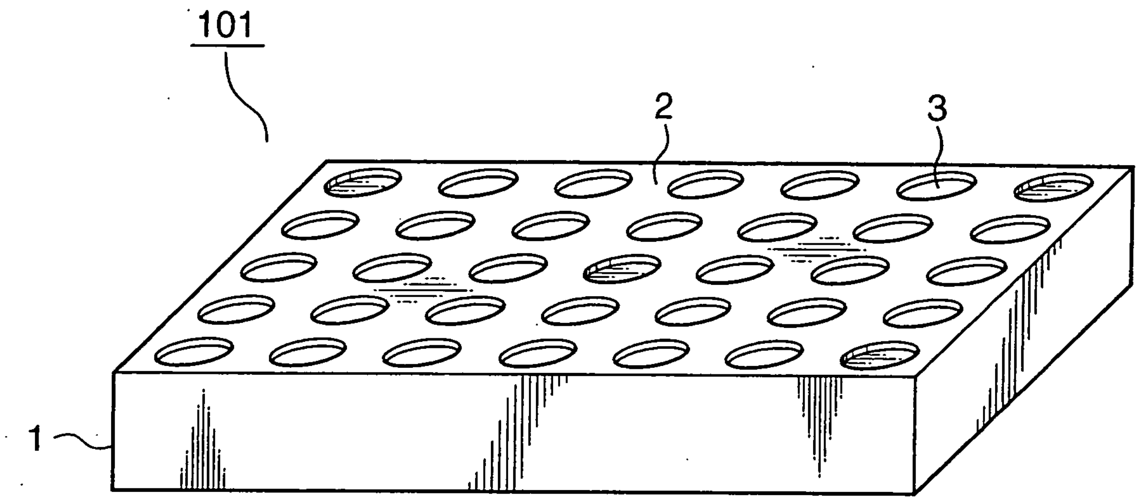

FIG.2A

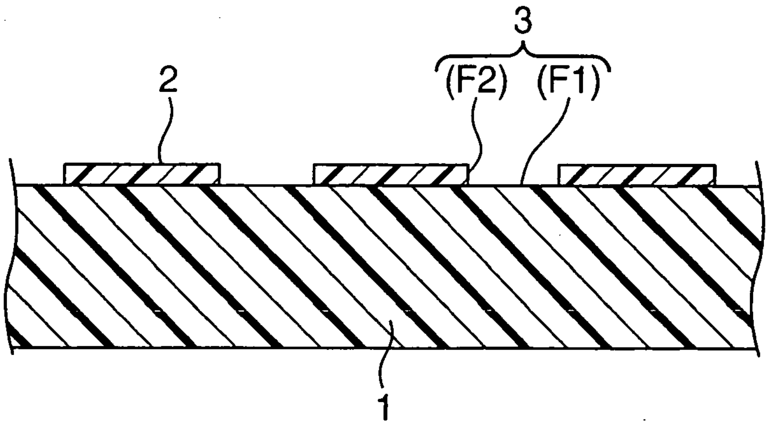


FIG.2B

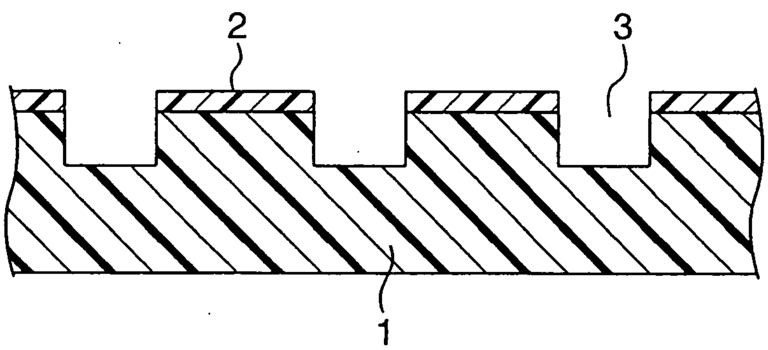

FIG.3

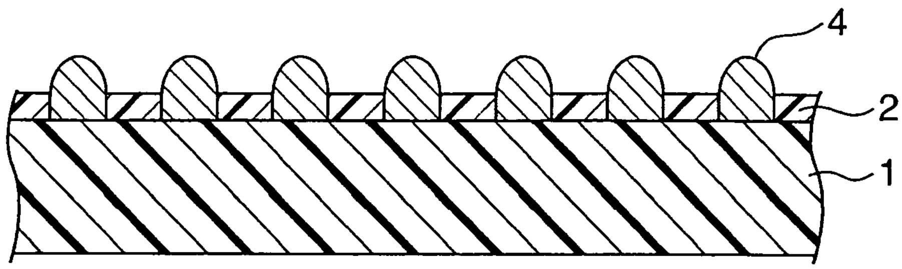


FIG.4

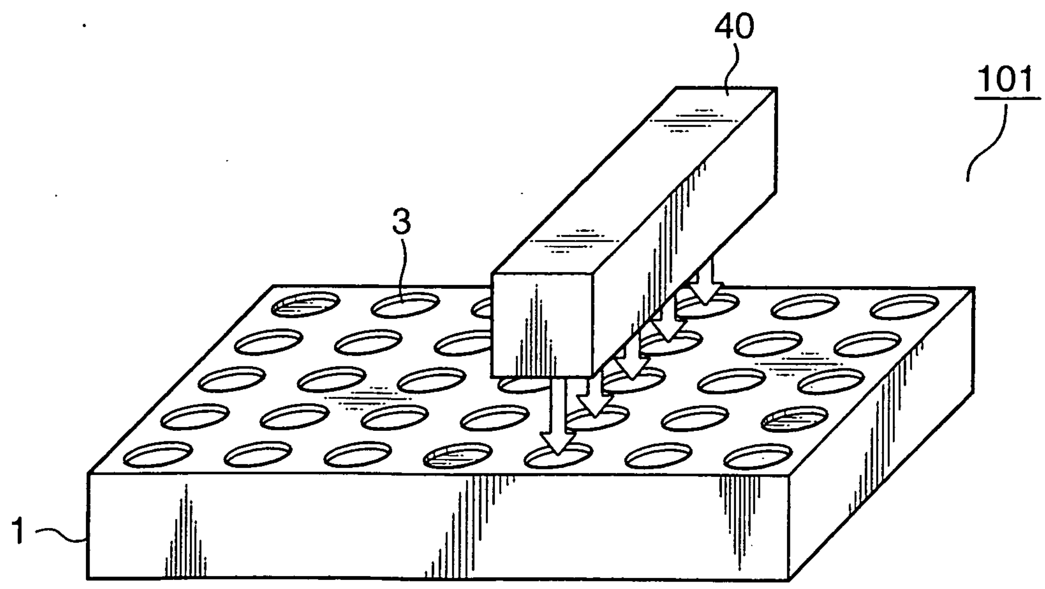

FIG.5

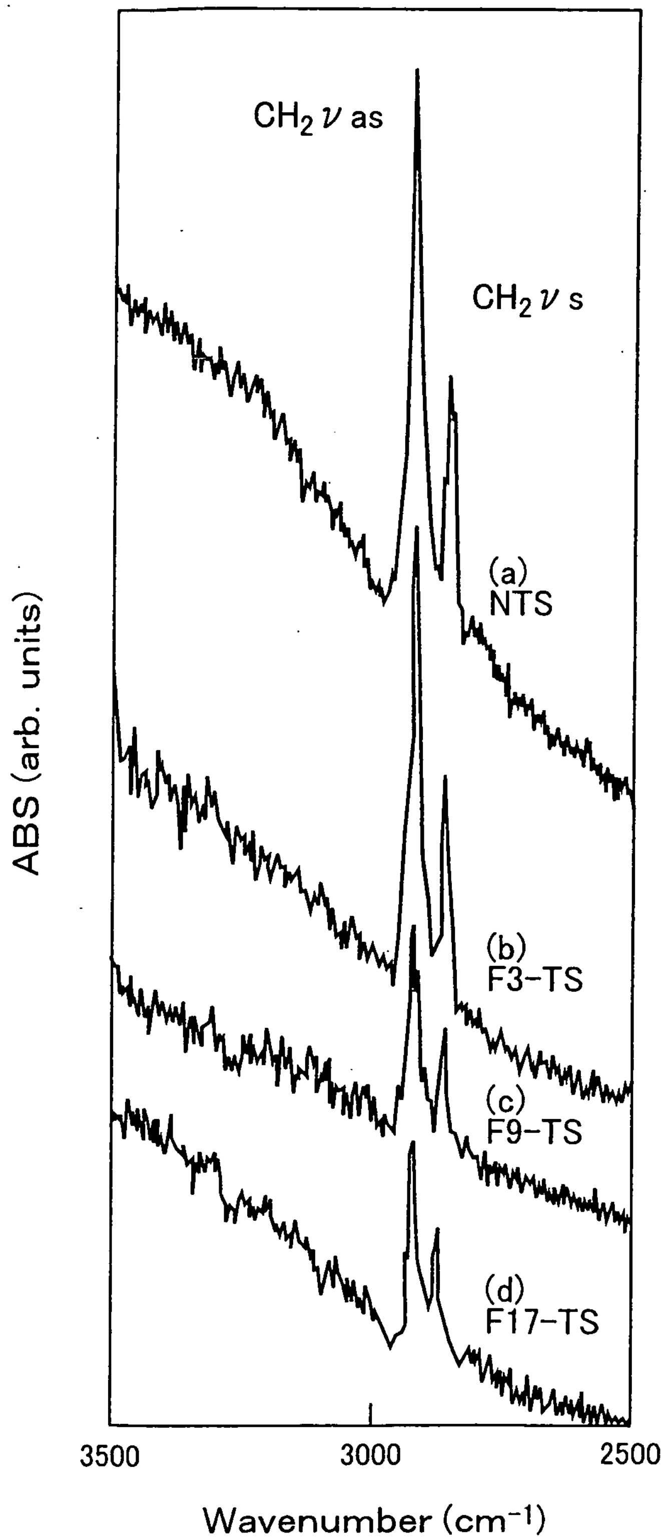
CH2 ν as
CH2 ν s
(a)
NTS
(b)
F3-TS
(c)
F9-TS
(d)
F17-TS
ABS (arb. units)
3500
3000
2500
Wavenumber (cm-1)

FIG. 6